# EUROPEAN PATENT APPLICATION

(11) **EP 4 672 560 A1**
(43) Date of publication of application: **31.12.2025**
(21) Application number: 23923968.4
(22) Date of filing: 20.02.2023
(51) Int. Cl.: H02K 1/22

(54) **ROTOR, ROTARY ELECTRICAL MACHINE, ROTOR MANUFACTURING METHOD, COMPONENT, AND COMPONENT MANUFACTURING METHOD**

(71) Applicant: Mitsubishi Electric Mobility Corporation, Tokyo 100-8310 (JP)
(72) Inventor: YAMAMOTO, Takashi, Tokyo 100-8310 (JP); NISHIKAWA, Hideya, Tokyo 100-8310 (JP); IMAI, Toshiki, Tokyo 100-8310 (JP)
(74) Representative: Hoffmann Eitle
(86) International application number: PCT/JP2023/006047
(87) International publication number: WO 2024/176312

(57) **Abstract**

A rotor (2) includes: a rotor core (20) provided with a rotary shaft (1) as a rotation center of a rotary electrical machine (100); and a magnet (3) provided to the rotor core (20). The rotor core (20) includes: a press-fit hole (21) into which the rotary shaft (1) is inserted in an axial direction (Y) so as to be fixed; and a through hole (6) which penetrates in the axial direction (Y) and is formed at one or more locations in a circumferential direction, between the press-fit hole (21) and an outer circumferential surface (22) of the rotor core (20). The through hole (6) has, at a part in the axial direction (Y), a positioning opening portion (4) having a smaller diameter (W2) than a minimum diameter (W1) of the through hole (6).

## Description

### TECHNICAL FIELD

The present disclosure relates to a rotor, a rotary electrical machine, a rotor manufacturing method, a component, and a component manufacturing method.

### BACKGROUND ART

A rotor of a conventional rotary electrical machine is formed such that at least one rotor core is fixed to a rotary shaft and magnets are attached in the circumferential direction at an outer circumferential surface of the rotor core or inside thereof. In general, fixation between the rotary shaft and the rotor core is performed by shrink-fit or press-fit, and positioning for phases or the like is needed depending on the shapes of these components. For example, a rotor having a stage skew structure has two or more rotor cores along the axial direction of a rotary shaft, and the rotor cores provided at the respective positions are fixed to the rotary shaft while being shifted from each other in the circumferential direction by a predetermined phase angle (skew angle). In this case, for forming the skew angle, the rotor cores provided at the respective positions have positioning openings, and a positioning pin is inserted through the positioning openings, thereby positioning the rotor cores, and then the rotary shaft is fixed thereto (see, for example, Patent Document 1).

### CITATION LIST

### PATENT DOCUMENT

Patent Document 1: Japanese Laid-Open Patent Publication (translation of PCT application) No. 2022-500984

### SUMMARY OF THE INVENTION

### PROBLEM TO BE SOLVED BY THE INVENTION

In a rotor as a conventional component, if a positioning openings of a rotor core are formed over the entire range in the axial direction, the dimensional tolerance of the positioning openings is likely to be deteriorated due to working accuracy and the like, and in order to avoid interference between the positioning opening and the positioning pin, the size of the positioning pin is inevitably set to be small, thus causing a problem of deteriorating positioning accuracy.

The present disclosure has been made to solve the above problem, and an object of the present disclosure is to provide a rotor, a rotary electrical machine, a rotor manufacturing method, a component, and a component manufacturing method that enable improvement in positioning accuracy in manufacturing of the rotor and the component.

### MEANS TO SOLVE THE PROBLEM

A rotor according to the present disclosure includes: a rotor core provided with a rotary shaft as a rotation center of a rotary electrical machine; and a magnet provided to the rotor core. The rotor core includes: a press-fit hole into which the rotary shaft is inserted in an axial direction so as to be fixed; and a through hole which penetrates in the axial direction and is formed at one or more locations in a circumferential direction, between the press-fit hole and an outer circumferential surface of the rotor core. The through hole has, at a part in the axial direction, a positioning portion having a smaller diameter than a diameter of another part of the through hole.

A rotary electrical machine according to the present disclosure includes: the rotor described above; and a stator having a plurality of windings and provided on an outer circumferential side of the rotor so as to be opposed thereto with a predetermined air gap therebetween.

A rotor manufacturing method according to the present disclosure is a rotor manufacturing method for manufacturing the rotor described above, wherein, after a positioning pin having a maximum diameter that allows insertion into the positioning portion is inserted into the through hole having the positioning portion in the rotor core, the rotary shaft is provided by being press-fitted into the press-fit hole of the rotor core, and then the positioning pin is pulled out from the rotor core.

A component according to the present disclosure is a component to be positioned relative to a manufacturing apparatus. The component has a through hole into which a positioning pin provided to the manufacturing apparatus is insertable, and the through hole has, at a part in a penetration direction, a positioning portion having a smaller diameter than a diameter of another part of the through hole.

A component manufacturing method according to the present disclosure is a component manufacturing method for manufacturing the component described above, wherein, after the positioning pin having a maximum diameter that allows insertion into the positioning portion is inserted into the through hole having the positioning portion in the component, a manufacturing process by the manufacturing apparatus for the component is performed, and then the positioning pin is pulled out from the component.

### EFFECT OF THE INVENTION

The rotor, the rotary electrical machine, the rotor manufacturing method, the component, and the component manufacturing method according to the present disclosure enable improvement in positioning accuracy in manufacturing of the rotor and the component.

### BRIEF DESCRIPTION OF THE DRAWINGS

[FIG. 1] FIG. 1 is a vertical sectional view showing a configuration of a rotary electrical machine according to embodiment 1.
[FIG. 2] FIG. 2 is a vertical sectional view showing a configuration of a rotor of the rotary electrical machine shown in FIG. 1.
[FIG. 3] FIG. 3 is a vertical sectional view showing a manufacturing method for the rotor shown in FIG. 2.
[FIG. 4] FIG. 4 is a vertical sectional view showing the manufacturing method for the rotor shown in FIG. 2.
[FIG. 5] FIG. 5 is a vertical sectional view showing another configuration of the rotor of the rotary electrical machine shown in FIG. 1.
[FIG. 6] FIG. 6 is a vertical sectional view showing a manufacturing method for the rotor shown in FIG. 5.
[FIG. 7] FIG. 7 is a vertical sectional view showing a configuration of a rotor according to embodiment 2.
[FIG. 8] FIG. 8 is a vertical sectional view showing a manufacturing method for the rotor shown in FIG. 7.
[FIG. 9] FIG. 9 is a plan view showing a configuration of a core piece of the rotor shown in FIG. 7.
[FIG. 10] FIG. 10 is a plan view showing a configuration of a core piece of the rotor shown in FIG. 7.
[FIG. 11] FIG. 11 is a vertical sectional view showing a configuration of a rotor core of a rotor according to embodiment 3.
[FIG. 12] FIG. 12 is a vertical sectional view showing a configuration of a rotor core of a rotor according to embodiment 4.
[FIG. 13] FIG. 13 is a vertical sectional view showing a configuration of a rotor core of a rotor according to embodiment 5.
[FIG. 14] FIG. 14 is a vertical sectional view showing a state in which a positioning pin is inserted into the rotor core shown in FIG. 13.
[FIG. 15] FIG. 15 is a vertical sectional view showing a configuration of a rotor core of a rotor according to embodiment 6.
[FIG. 16] FIG. 16 is a vertical sectional view showing a configuration of a rotor core of another rotor according to embodiment 6.
[FIG. 17] FIG. 17 is a vertical sectional view showing a state in which a positioning pin is inserted into the rotor core shown in FIG. 16.
[FIG. 18] FIG. 18 is a vertical sectional view showing a configuration of a rotor core of another rotor according to embodiment 6.
[FIG. 19] FIG. 19 is a vertical sectional view showing a configuration of a rotor core of another rotor according to embodiment 6.
[FIG. 20] FIG. 20 is a vertical sectional view showing a configuration of a rotor core of a rotor according to embodiment 7.
[FIG. 21] FIG. 21 is a plan view showing a configuration of a rotor core shown in FIG. 20.
[FIG. 22] FIG. 22 is a plan view showing a configuration of a core piece of the rotor core shown in FIG. 20.
[FIG. 23] FIG. 23A is a plan view showing a configuration of the core piece of the rotor core shown in FIG. 20, FIG. 23B is a plan view showing a configuration of the core piece of the rotor core shown in FIG. 20, FIG. 23C is a plan view showing a configuration of the core piece of the rotor core shown in FIG. 20, FIG. 23D is a plan view showing a configuration of the core piece of the rotor core shown in FIG. 20, and FIG. 23E is a plan view showing a configuration of the core piece of the rotor core shown in FIG. 20.
[FIG. 24] FIG. 24 is a vertical sectional view showing a configuration of a rotor core of a rotor according to embodiment 8.
[FIG. 25] FIG. 25 is a plan view showing a configuration of the rotor core shown in FIG. 24.
[FIG. 26] FIG. 26 is a plan view showing a configuration of a core piece of the rotor core shown in FIG. 24.
[FIG. 27] FIG. 27A is a plan view showing a configuration of the core piece of the rotor core shown in FIG. 24, FIG. 27B is a plan view showing a configuration of the core piece of the rotor core shown in FIG. 24, FIG. 27C is a plan view showing a configuration of the core piece of the rotor core shown in FIG. 24, FIG. 27D is a plan view showing a configuration of the core piece of the rotor core shown in FIG. 24, and FIG. 27E is a plan view showing a configuration of the core piece of the rotor core shown in FIG. 24.
[FIG. 28] FIG. 28 is a vertical sectional view showing a state in which a positioning pin is inserted into the rotor core shown in FIG. 24.
[FIG. 29] FIG. 29 is a plan view showing a state in which the positioning pin is inserted into the rotor core shown in FIG. 25.
[FIG. 30] FIG. 30 is a vertical sectional view showing a configuration of a rotor core of a rotor according to embodiment 9.
[FIG. 31] FIG. 31 is a plan view showing a configuration of the rotor core shown in FIG. 30.
[FIG. 32] FIG. 32 is a plan view showing a configuration of a core piece of the rotor core shown in FIG. 30.
[FIG. 33] FIG. 33A is a plan view showing a configuration of the core piece of the rotor core shown in FIG. 30, FIG. 33B is a plan view showing a configuration of the core piece of the rotor core shown in FIG. 30, FIG. 33C is a plan view showing a configuration of the core piece of the rotor core shown in FIG. 30, FIG. 33D is a plan view showing a configuration of the core piece of the rotor core shown in FIG. 30, and FIG. 33E is a plan view showing a configuration of the core piece of the rotor core shown in FIG. 30.
[FIG. 34] FIG. 34 is a vertical sectional view showing a state in which a positioning pin is inserted into the rotor core shown in FIG. 30.
[FIG. 35] FIG. 35 is a plan view showing a state in which the positioning pin is inserted into the rotor core shown in FIG. 31.
[FIG. 36] FIG. 36 is a vertical sectional view showing a configuration of a rotor core of a rotor according to embodiment 10.
[FIG. 37] FIG. 37 is a plan view showing a configuration of the rotor core shown in FIG. 36.
[FIG. 38] FIG. 38 is a plan view showing a configuration of a core piece of the rotor core shown in FIG. 36.
[FIG. 39] FIG. 39A is a plan view showing a configuration of the core piece of the rotor core shown in FIG. 36, FIG. 39B is a plan view showing a configuration of the core piece of the rotor core shown in FIG. 36, FIG. 39C is a plan view showing a configuration of the core piece of the rotor core shown in FIG. 36, FIG. 39D is a plan view showing a configuration of the core piece of the rotor core shown in FIG. 36, and FIG. 39E is a plan view showing a configuration of the core piece of the rotor core shown in FIG. 36.
[FIG. 40] FIG. 40 is a vertical sectional view showing a state in which a positioning pin is inserted into the rotor core shown in FIG. 36.
[FIG. 41] FIG. 41 is a plan view showing a state in which the positioning pin is inserted into the rotor core shown in FIG. 37.
[FIG. 42] FIG. 42 is a perspective view showing a configuration of the positioning pin shown in FIG. 36.
[FIG. 43] FIG. 43 is a vertical sectional view showing a configuration of a rotor core of a rotor according to embodiment 11.
[FIG. 44] FIG. 44 is a plan view showing a configuration of the rotor core shown in FIG. 43.
[FIG. 45] FIG. 45 is a plan view showing a configuration of a core piece of the rotor core shown in FIG. 43.
[FIG. 46] FIG. 46 is a plan view showing a configuration of the core piece of the rotor core shown in FIG. 43.
[FIG. 47] FIG. 47 is a vertical sectional view showing a state in which a positioning pin is inserted into the rotor core shown in FIG. 43.
[FIG. 48] FIG. 48 is a vertical sectional view showing a configuration of a rotor core of a rotor according to embodiment 12.
[FIG. 49] FIG. 49 is a plan view showing a configuration of the rotor core shown in FIG. 48.
[FIG. 50] FIG. 50 is a plan view showing a configuration of a core piece of the rotor core shown in FIG. 48.
[FIG. 51] FIG. 51A is a plan view showing a configuration of the core piece of the rotor core shown in FIG. 48, FIG. 51B is a plan view showing a configuration of the core piece of the rotor core shown in FIG. 48, FIG. 51C is a plan view showing a configuration of the core piece of the rotor core shown in FIG. 48, FIG. 51D is a plan view showing a configuration of the core piece of the rotor core shown in FIG. 48, and FIG. 51E is a plan view showing a configuration of the core piece of the rotor core shown in FIG. 48.
[FIG. 52] FIG. 52 is a vertical sectional view showing a state in which a positioning pin is inserted into the rotor core shown in FIG. 48.
[FIG. 53] FIG. 53 is a plan view showing a state in which the positioning pin is inserted into the rotor core shown in FIG. 49.
[FIG. 54] FIG. 54 is a vertical sectional view showing a configuration of a rotary electrical machine according to embodiment 13.
[FIG. 55] FIG. 55 is a plan view showing a configuration of a stator of the rotary electrical machine shown in FIG. 54.

### DESCRIPTION OF EMBODIMENTS

In the following description, the axial direction of a rotary shaft 1 as a rotation center of a rotary electrical machine 100 is shown as an axial direction Y. Accordingly, also in other parts composing the rotary electrical machine 100, this direction applies in the same manner and is used as a reference in description. In addition, a side where insertion of the rotary shaft 1 into a rotor core 20 is started is shown as a press-fit start side Y1, and a manufacturing apparatus reception side of the rotary shaft 1 is shown as a reception surface side Y2.

### Embodiment 1

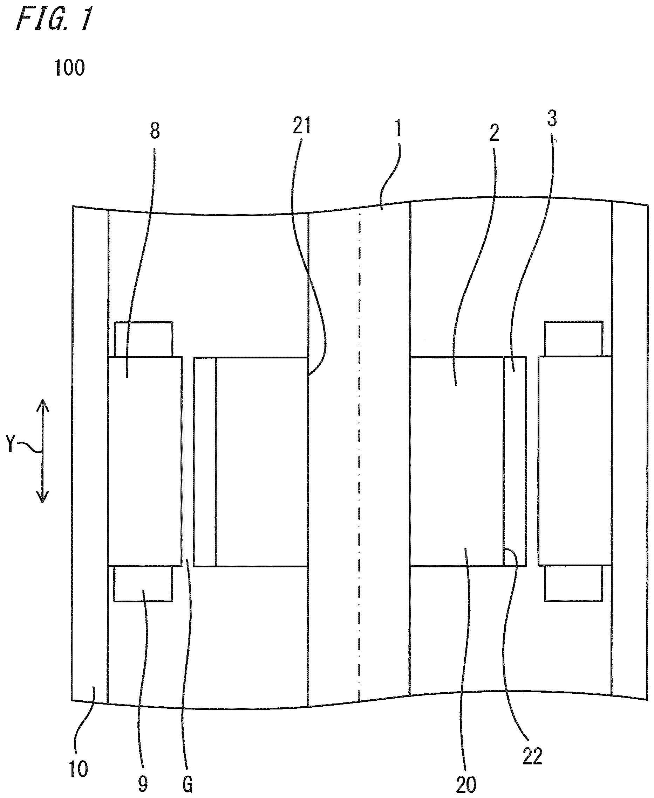

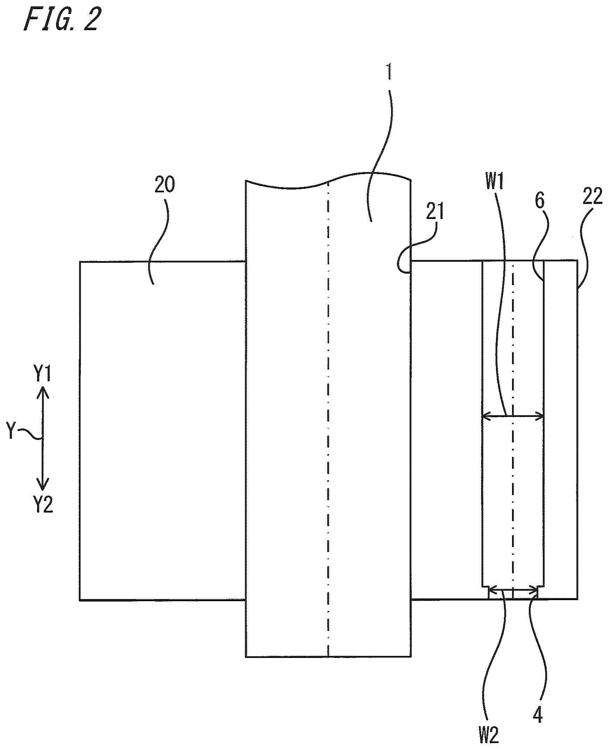

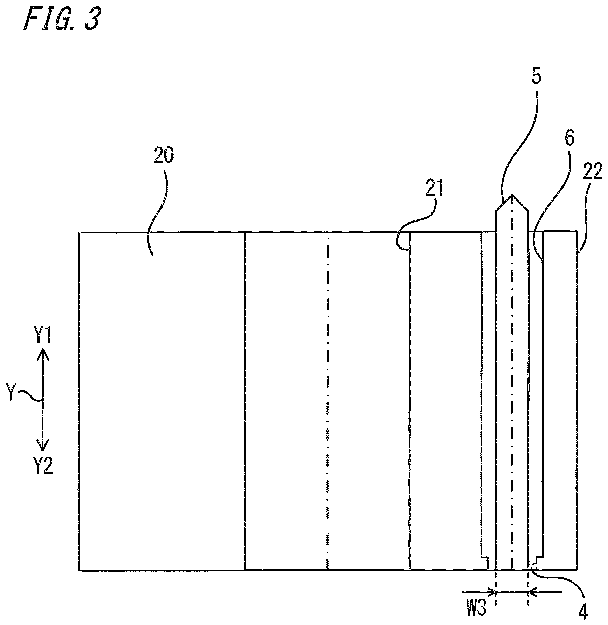

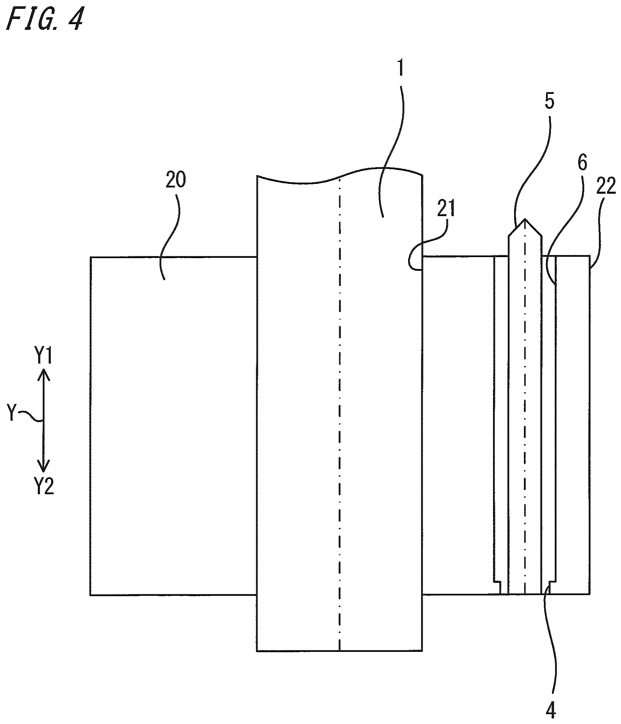

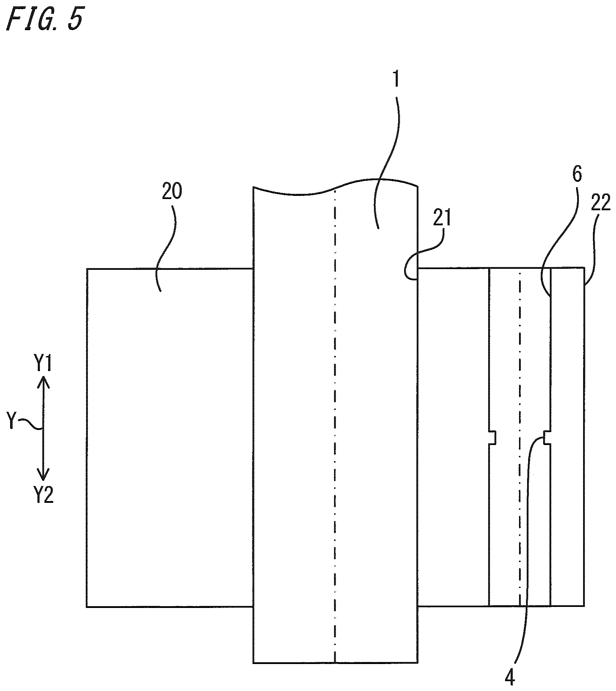

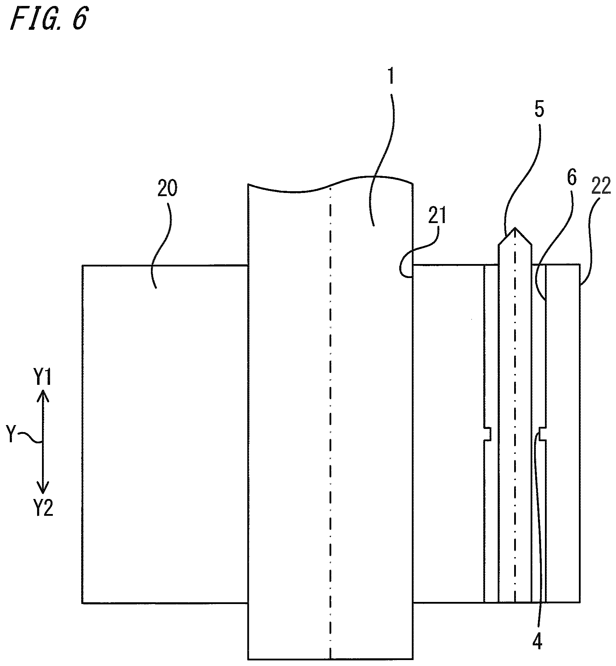

FIG. 1 is a vertical sectional view showing a configuration of a rotary electrical machine according to embodiment 1. FIG. 1 is a vertical sectional view at a part where a through hole 6 described later is not formed. FIG. 2 is a vertical sectional view showing a configuration of a rotor of the rotary electrical machine shown in FIG. 1. FIG. 3 and FIG. 4 are vertical sectional views showing a manufacturing method for the rotor shown in FIG. 2. FIG. 5 is a vertical sectional view showing another configuration of the rotor of the rotary electrical machine shown in FIG. 1. FIG. 6 is a vertical sectional view showing a manufacturing method for the rotor shown in FIG. 5.

As shown in FIG. 1, the rotary electrical machine 100 includes a stator 8 and a rotor 2 in a motor case 10. The rotary electrical machine 100 is used as an electric power steering motor used in an automobile, for example. The reason is as follows. The present disclosure is applicable to rotary electrical machines as mass-produced products, and in particular, electric power steering motors are required to have reduced performance variations among products and therefore the present disclosure provides significant effects thereto. Also in the other embodiments, the rotary electrical machine 100 is used as an electric power steering motor of an automobile, and therefore the description thereof is omitted as appropriate.

The stator 8 is formed such that a plurality of core pieces which are obtained by stamping sheet materials such as electromagnetic steel sheets by a press or the like are stacked in the axial direction Y by a swage, and is provided with a coil 9 wound with a predetermined number of turns. The stator 8 is fixed to the inner circumferential side of the motor case 10 by press-fit or the like.

The rotor 2 includes a rotor core 20, a rotary shaft 1 as a rotation center of the rotary electrical machine 100, and a magnet 3. The rotor core 20 has a press-fit hole 21 which penetrates in the axial direction Y at the center and into which the rotary shaft 1 is inserted by being press-fitted. The magnet 3 is provided so as to be fixed to an outer circumferential surface 22 of the rotor core 20. The rotor 2 is provided on the inner circumferential side of the stator 8 with a predetermined gap G therebetween, and is configured to be rotatable with rotation of the rotary shaft 1.

As shown in FIG. 2, the rotor core 20 has, between the press-fit hole 21 and the outer circumferential surface 22 of the rotor core 20, a through hole 6 which penetrates in the axial direction Y and which is formed at one or more locations, here, one location, in the circumferential direction. The through hole 6 has, at a part in the axial direction Y, a positioning portion 4 having a smaller diameter W2 than a diameter W1 of another part of the through hole 6. Here, the positioning portion 4 is formed at a position on the reception surface side Y2, which is one end side in the axial direction Y of the through hole 6. The relationship between the diameter W1 of the other part and the diameter W2 of the positioning portion 4 of the through hole 6 applies in the same manner also in the other embodiments, and therefore the description thereof is omitted here.

Next, the rotor manufacturing method according to embodiment 1 configured as described above will be described with reference to FIG. 2 to FIG. 4. First, as shown in FIG. 3, a positioning pin 5 is inserted into the through hole 6 of the rotor core 20, from the reception surface side Y2 to the press-fit start side Y1. The positioning pin 5 has a maximum diameter W3 that allows insertion into the positioning portion 4. The positioning pin 5 is provided on a side of a manufacturing apparatus for manufacturing the rotor 2, and is used for positioning of the rotor core 20 relative to the manufacturing apparatus when the rotary shaft 1 is inserted into the rotor core 20.

By the positioning pin 5 being inserted into the through hole 6, the positioning pin 5 is constrained in a plane direction perpendicular to the axial direction Y at the positioning portion 4, whereby positioning of the rotor core 20 relative to the manufacturing apparatus can be made. In addition, there is almost no interference between the through hole 6 and the positioning pin 5, and therefore the size of the positioning pin 5 need not be set to be smaller undesirably.

Next, as shown in FIG. 4, the rotary shaft 1 is press-fitted and inserted from the press-fit start side Y1 to the reception surface side Y2 into the press-fit hole 21 of the rotor core 20 positioned relative to the manufacturing apparatus by the positioning pin 5. Next, as shown in FIG. 2, the positioning pin 5 is pulled out from the through hole 6, whereby provision of the rotary shaft 1 to the rotor core 20 is completed.

In the above example, the case of forming the positioning portion 4 at the position on the reception surface side Y2 which is one end side in the axial direction Y of the through hole 6 has been shown. However, without limitation thereto, in another example shown in FIG. 5, the through hole 6 has the positioning portion 4 at a part in the axial direction Y, here, at a position of a center part in the axial direction Y. Thus, as in the above example, as shown in FIG. 6, when the positioning pin 5 is inserted into the through hole 6, the positioning pin 5 is constrained by the positioning portion 4, whereby the position of the rotor core 20 relative to the manufacturing apparatus is determined. The positioning portion 4 may be formed at another position in the axial direction Y in the through hole 6 different from the positions shown in the above examples, and in any case, the same effects can be provided.

In the examples of the above embodiment 1, the case of forming the through hole 6 at one location in the rotor core 20 has been shown. However, without limitation thereto, the through holes 6 penetrating in the axial direction Y may be formed at two or more locations in the circumferential direction, between the press-fit hole 21 and the outer circumferential surface 22 of the rotor core 20. In this case, the positioning pins 5 may be inserted into all the through holes 6 having the positioning portions 4, or the positioning pin 5 may be inserted into at least one of the through holes 6 having the positioning portions 4. This applies in the same manner in the other embodiments, and therefore the description thereof is omitted as appropriate.

The number of the positioning pins 5 to be used is not particularly limited. One positioning pin 5 may be provided as shown in the examples of the above embodiment 1, or in a case where the through holes 6 are formed at a plurality of locations, a plurality of the positioning pins 5 may be provided. In a case of providing the positioning pin 5 in the through hole 6 only at one location, there is a possibility that the rotor core 20 rotates about the positioning pin 5. However, it is important that the rotor core 20 does not move from a state of being placed at a prescribed position by means of the positioning pin 5 until the rotary shaft 1 starts to be press-fitted, and in this manufacturing method, the position can be sufficiently prescribed even by one positioning pin 5. As a method for placing the rotor core 20 at a prescribed position using the positioning pin 5, the rotor core 20 may be placed using a robot arm or the like for which the prescribed position is set as coordinate information, or may be placed by a person using a guide jig for restricting the outer circumferential surface 22 or the press-fit hole 21 of the rotor core 20.

In the examples of the above embodiment 1, if rotation of the rotor 2 becomes unstable due to the through hole 6 formed in the rotor core 20, this may be addressed by providing a balancer or the like. This applies in the same manner also in the other embodiments, and therefore the description thereof is omitted as appropriate.

In the examples of the above embodiment 1, the case where the positioning pin 5 is inserted into the through hole 6 of the rotor core 20 from the reception surface side Y2 to the press-fit start side Y1 in the axial direction Y, has been shown. However, without limitation thereto, in accordance with the specifications of the manufacturing apparatus for the rotor 2, the positioning pin 5 may be inserted into the through hole 6 of the rotor core 20 from the press-fit start side Y1 to the reception surface side Y2 in the axial direction Y. This applies in the same manner also in the other embodiments, and therefore the description thereof is omitted as appropriate.

In the above examples of the above embodiment 1, as the component, a rotor of a rotary electrical machine has been shown. However, without limitation thereto, the present disclosure is applicable to any component that needs to be positioned relative to the manufacturing apparatus. In this case, the component that needs to be positioned relative to the manufacturing apparatus has the through hole 6 into which the positioning pin 5 provided to the manufacturing apparatus is insertable, and the through hole 6 has, at a part in the penetration direction (the same direction as the axial direction Y), the positioning portion 4 having the smaller diameter W2 than the diameter W1 of another part of the through hole 6.

In the component manufacturing method, after the positioning pin 5 having the maximum diameter W3 that allows insertion into the positioning portion 4 is inserted into the through hole 6 having the positioning portion 4 in the component, a manufacturing process by the manufacturing apparatus for the component is performed, and then the positioning pin 5 is pulled out from the component. Also in the other embodiments, this applies in the same manner for a component that needs to be positioned relative to a manufacturing apparatus, and therefore the description thereof is omitted as appropriate.

In the above examples, the case where the length in the axial direction Y of the positioning pin 5 is set to be greater than the length in the axial direction Y of the through hole 6, has been shown. However, without limitation thereto, the minimum necessary length in the axial direction Y of the positioning pin 5 is a length from the side where the positioning pin 5 is inserted to the position where the closest positioning portion 4 is formed, and the positioning effect can be provided as long as the minimum necessary length is ensured. This applies in the same manner also in the other embodiments, and therefore the description thereof is omitted as appropriate.

The rotor according to embodiment 1 configured as described above includes: a rotor core provided with a rotary shaft as a rotation center of a rotary electrical machine; and a magnet provided to the rotor core. The rotor core includes: a press-fit hole into which the rotary shaft is inserted in an axial direction so as to be fixed; and a through hole which penetrates in the axial direction and is formed at one or more locations in a circumferential direction, between the press-fit hole and an outer circumferential surface of the rotor core. The through hole has, at a part in the axial direction, a positioning portion having a smaller diameter than a diameter of another part of the through hole.

The rotary electrical machine according to embodiment 1 configured as described above includes: the rotor described above; and a stator having a plurality of windings and provided on an outer circumferential side of the rotor so as to be opposed thereto with a predetermined air gap therebetween.

The rotor manufacturing method according to embodiment 1 configured as described above is a rotor manufacturing method for manufacturing the rotor described above, wherein, after a positioning pin having a maximum diameter that allows insertion into the positioning portion is inserted into the through hole having the positioning portion in the rotor core, the rotary shaft is provided by being press-fitted into the press-fit hole of the rotor core, and then the positioning pin is pulled out from the rotor core.

Thus, the dimensional tolerance of the positioning portion of the rotor core can be reduced, whereby the size of the positioning pin can be set to be large, so that positioning accuracy is improved and a stator of a rotary electrical machine can be assembled with performance variations reduced.

In the rotor according to embodiment 1 configured as described above, the positioning portion is formed at a position on one end surface side in the axial direction of the rotor core.

Thus, the positioning portion can be easily formed.

In the rotor according to embodiment 1 configured as described above, the positioning portion is formed at a position of a center part in the axial direction of the rotor core.

Thus, positioning can be easily performed.

In the rotary electrical machine according to embodiment 1 configured as described above, the rotary electrical machine is an electric power steering motor of an automobile.

Thus, products can be obtained with performance variations reduced.

A component according to embodiment 1 configured as described above is a component to be positioned relative to a manufacturing apparatus. The component has a through hole into which a positioning pin provided to the manufacturing apparatus is insertable, and the through hole has, at a part in a penetration direction, a positioning portion having a smaller diameter than a diameter of another part of the through hole.

A component manufacturing method according to embodiment 1 configured as described above is a component manufacturing method for manufacturing the component described above, wherein, after the positioning pin having a maximum diameter that allows insertion into the positioning portion is inserted into the through hole having the positioning portion in the component, a manufacturing process by the manufacturing apparatus for the component is performed, and then the positioning pin is pulled out from the component.

Thus, the dimensional tolerance of the positioning portion of the component can be reduced, whereby the size of the positioning pin can be set to be large, so that positioning accuracy is improved and a component can be obtained with performance variations reduced.

In the above embodiment 1, the case of forming the rotor core 20 in one structure has been shown. However, without limitation thereto, in the following embodiments, a case of forming the rotor core 20 by stacking a plurality of core pieces in the axial direction Y will be described. The core piece is formed by stamping a thin sheet material such as low carbon steel by a press or the like, for example. A plurality of the core pieces are stacked in the axial direction Y in a state of being fixed to each other by a fixation portion, e.g., a swage. Thus, since the core pieces are formed by thin sheet materials and are stacked in a state of being fixed in the axial direction Y by a swage or the like, the dimensional tolerance of the positioning portion is deteriorated due to stacking displacement or the like, and this might result in deterioration in positioning accuracy. The following embodiments further solve the above problem.

### Embodiment 2

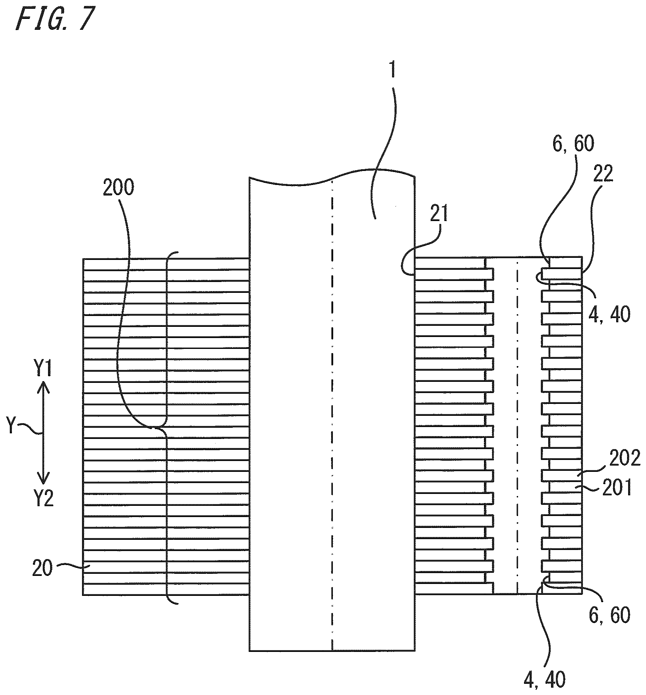

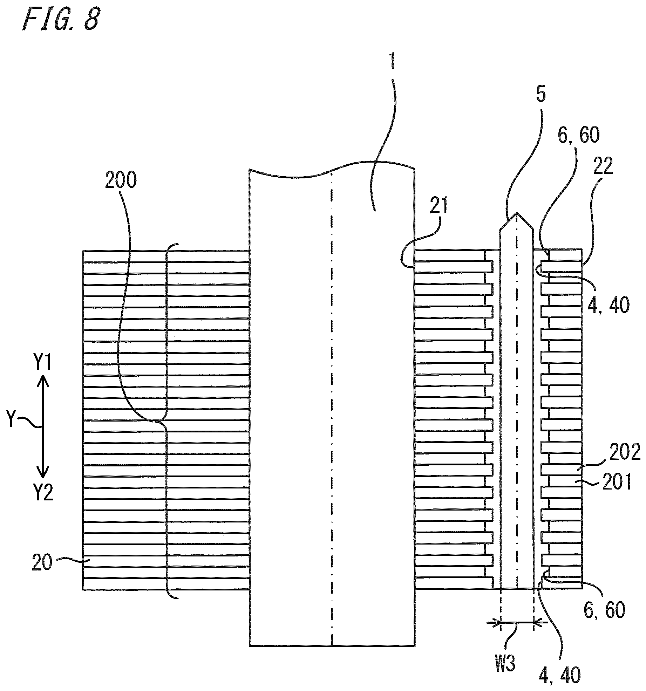

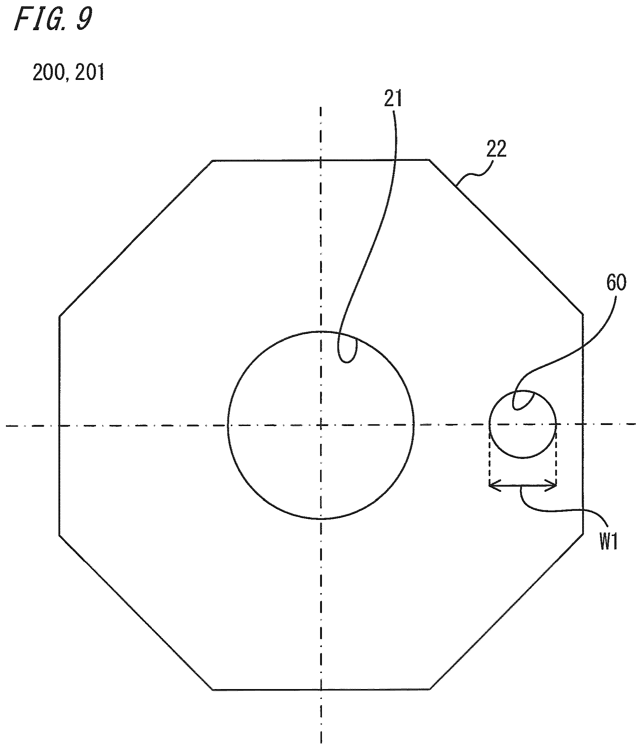

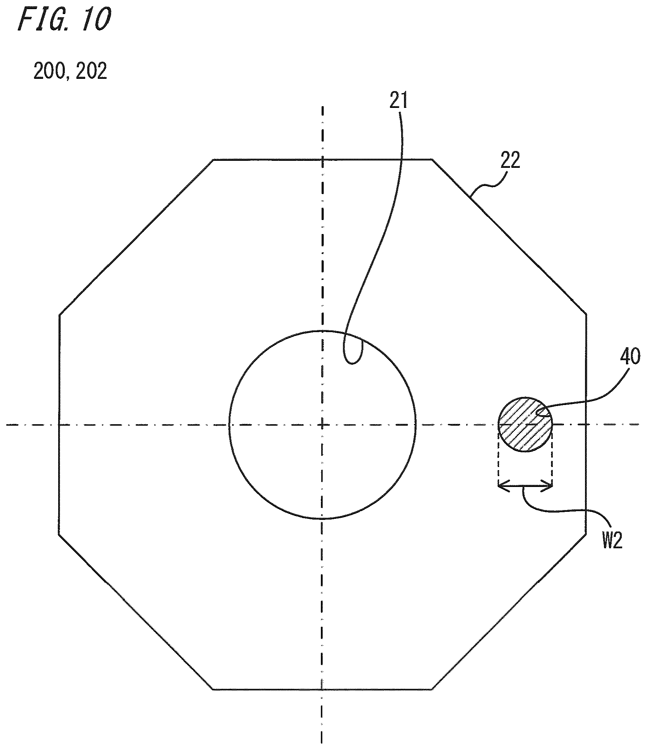

FIG. 7 is a vertical sectional view showing a configuration of a rotor according to embodiment 2. FIG. 8 is a vertical sectional view showing a manufacturing method for the rotor shown in FIG. 7. FIG. 9 and FIG. 10 are plan views showing a configuration of a core piece of the rotor shown in FIG. 7.

In the drawings, the same parts as in the above embodiment 1 are denoted by the same reference characters, and the description thereof is omitted. The rotor core 20 is formed by stacking a plurality of core pieces 200 in the axial direction Y. The plurality of core pieces 200 are fixed to each other in the axial direction Y by a fixation portion, e.g., a swage. The core pieces 200 of the rotor core 20 include a plurality of kinds. One kind of core piece 201 shown in FIG. 9 has a through opening 60 to form the through hole 6. Another kind of core piece 202 shown in FIG. 10 has a positioning opening 40 to form the positioning portion 4.

Therefore, the diameter of the through opening 60 is the diameter W1, and the diameter of the positioning opening 40 is the diameter W2, thus having the same relationship as in the above embodiment 1. In order to discriminate the positioning opening 40 from the through opening 60, hatching is provided at the positioning opening 40 in the plan view. In a case of mentioning the core pieces without discriminating the kinds, they are referred to as core pieces 200. This applies in the same manner also in the other embodiments, and therefore the description thereof is omitted.

In the rotor core 20, the core pieces 201 and the core pieces 202 are stacked alternately in the axial direction Y, whereby, as shown in FIG. 7, the through hole 6 having the positioning portion 4 is formed at every second piece in the axial direction Y among the core pieces 200. Then, as shown in FIG. 8, as in the above embodiment 1, the positioning pin 5 is inserted into the through hole 6, whereby movement in the horizontal direction is restricted by the positioning portion 4. In addition, in the rotor core 20, the number of the provided core pieces 202 having the positioning openings 40 can be made smaller than the total number of the stacked core pieces 200, so that the influence of stacking displacement or the like is reduced, whereby the dimensional tolerance of the positioning portion 4 can be reduced and positioning accuracy can be improved.

In FIG. 7, the case where the core pieces 202 having the positioning openings 40 and the core pieces 201 having the through openings 60 are stacked alternately in the axial direction Y, has been shown. However, the positioning portion 4 in the through hole 6 can be set at any position in the axial direction Y by adjusting a die configuration and a stacking program for performing press work for the core piece 200.

As shown in FIG. 10, the positioning opening 40 to form the positioning portion 4 is formed in a circular shape. Thus, as compared to a polygonal shape, working can be performed accurately and easily, leading to reduction in working cost. In a case of using press work, since a sharp shape is absent, die rigidity increases, leading to increase in the life of the die. Further, since the positioning portion 4 has a circular shape, the number of dimension items to be managed in assembling can be minimized, whereby assembling of the rotor 2 using the positioning pin 5 can be simplified.

In FIG. 10, the case of forming the positioning portion 4 in a circular shape has been shown. However, as long as the size relationship between the positioning opening 40 and the through opening 60, i.e., the through hole 6 and the positioning portion 4, is satisfied, the shape of the through opening 60 is not limited, and the through opening 60 may have a circular shape or a polygonal shape.

In the rotor according to embodiment 2 configured as described above, the same effects as in the above embodiment 1 are provided, and in addition,
the rotor core is formed by stacking a plurality of core pieces in the axial direction, and
the plurality of core pieces are formed in a state of being fixed to each other in the axial direction by a fixation portion.

Thus, in the rotor core, the positioning portion can be formed by a smaller number of core pieces than the total number of stacked core pieces, so that the influence of stacking displacement or the like is reduced, whereby the dimensional tolerance of the positioning portion can be reduced and positioning accuracy can be improved.

In the rotor according to embodiment 2 configured as described above, the core pieces of the rotor core include a plurality of kinds, one kind of the core piece has a through opening to form the through hole, and another kind of the core piece has a positioning opening to form the positioning portion.

Thus, it is possible to easily form the positioning portion in the through hole by merely adjusting the stacking order of a plurality of kinds of core pieces.

In the rotor according to embodiment 2 configured as described above, the positioning portion has a circular shape.

Thus, the circular shape can be worked accurately and easily as compared to a polygonal shape or the like, leading to reduction in working cost. In addition, in press work, since the circular shape does not have a sharp shape, die rigidity is increased and the life of the die can be increased. Further, owing to the circular shape, the number of dimension items to be managed in assembling can be minimized, whereby assembling can be simplified.

### Embodiment 3

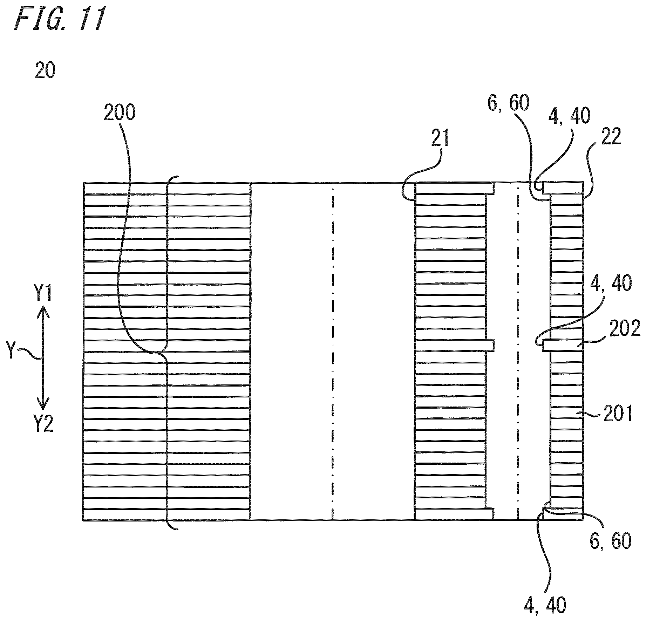

FIG. 11 is a vertical sectional view showing a configuration of a rotor core of a rotor according to embodiment 3. In the drawings, the same parts as in the above embodiments are denoted by the same reference characters, and the description thereof is omitted. As shown in FIG. 11, in the present embodiment 3, for example, the stacking positions of the core pieces 201 and the core pieces 202 shown in FIG. 9 and FIG. 10 in the above embodiment 2 are adjusted, whereby, in the through hole 6, the positioning portions 4 are formed at positions on both end sides and a position of a center part in the axial direction Y of the rotor core 20.

Thus, since the positioning portions 4 are formed at only parts corresponding to an upper end position, a center position, and a lower end position in the length in the axial direction Y of the rotor core 20, the influence of stacking displacement or the like is reduced, and positioning can be performed more efficiently than in a case of providing the positioning portions over the entire range in the axial direction Y. In addition, in terms of dimension management for the rotor core 20, since the positioning portions 4 are formed at positions on both end sides, the positioning portions 4 can be visually recognized, whereby the dimensions can be measured and required accuracy for the rotor core 20 can be easily managed.

In FIG. 11, the case where the core pieces 202 having the positioning openings 40 are provided one by one at positions on both end sides and a position of a center part in the axial direction Y of the rotor core 20, and the core pieces 201 having the through openings 60 are provided at the other parts, has been shown. However, the numbers of these provided core pieces are not limited, and a plurality of the core pieces 202 having the positioning openings 40 may be provided consecutively or non-consecutively.

In the rotor according to embodiment 3 configured as described above, the same effects as in the above embodiments are provided, and in addition,

the positioning portions are formed at positions on both end surface sides in the axial direction of the rotor core.

Thus, the positioning portions can be visually recognized and required accuracy for the rotor core can be easily managed.

In the rotor according to embodiment 3 configured as described above, the positioning portion is formed at a position of a center part in the axial direction of the rotor core.

Thus, since positioning is performed at the center part of the through hole, positioning accuracy is improved.

### Embodiment 4

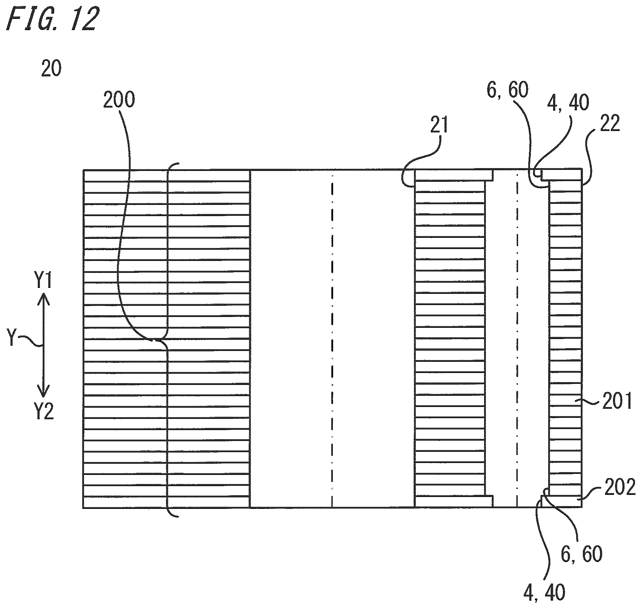

FIG. 12 is a vertical sectional view showing a configuration of a rotor core of a rotor according to embodiment 4. In the drawings, the same parts as in the above embodiments are denoted by the same reference characters, and the description thereof is omitted. As shown in FIG. 12, in the present embodiment 4, for example, the stacking positions of the core pieces 201 and the core pieces 202 shown in FIG. 9 and FIG. 10 in the above embodiment 2 are adjusted, whereby, in the through hole 6, the positioning portions 4 are formed at only positions on both end sides in the axial direction Y of the rotor core 20.

Thus, since the positioning portions 4 are provided at only positions on the upper end side and the lower end side in the length in the axial direction Y of the rotor core 20, the influence of stacking displacement or the like is reduced, positioning can be performed at parts where stacking of the rotor core 20 is started and finished, the positioning portions 4 can be visually recognized, and required accuracy for the rotor core 20 can be easily managed.

In the rotor according to embodiment 4 configured as described above, the same effects as in the above embodiments are provided, and in addition,
the positioning portions are formed at only positions on both end sides in the axial direction of the rotor core.

Also in this case, positioning can be performed at a smaller number of positioning locations, the positioning portions can be visually recognized, and required accuracy for the rotor core can be easily managed.

### Embodiment 5

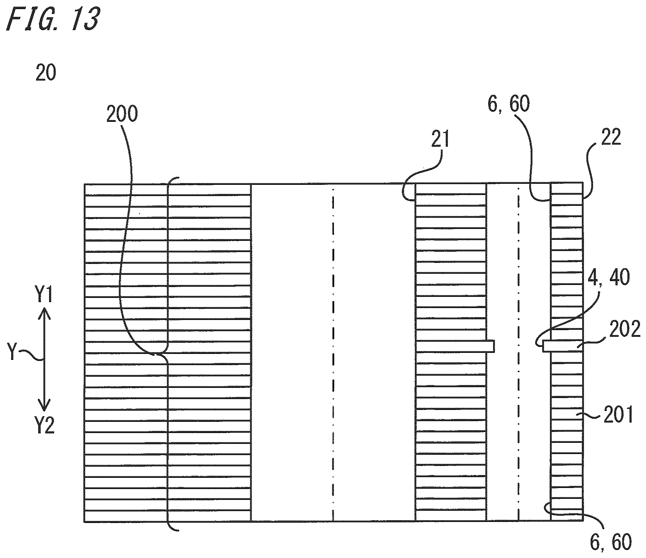

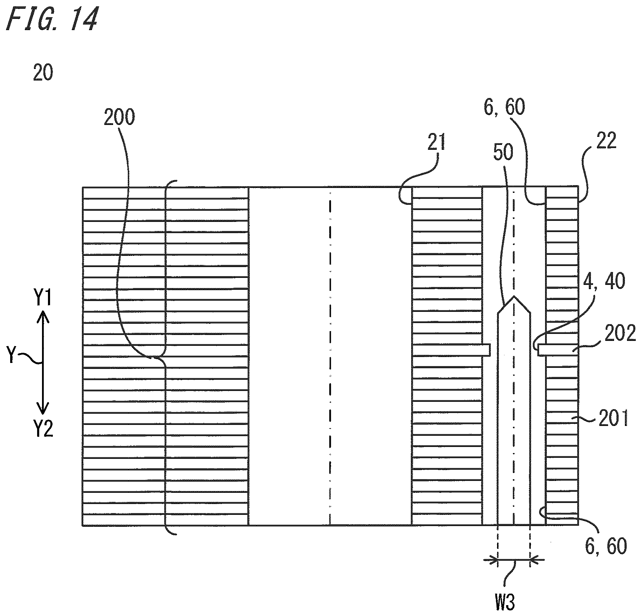

FIG. 13 is a vertical sectional view showing a configuration of a rotor core of a rotor according to embodiment 5. FIG. 14 is a vertical sectional view showing a state in which a positioning pin is inserted into the rotor core shown in FIG. 13. In the drawings, the same parts as in the above embodiments are denoted by the same reference characters, and the description thereof is omitted. As shown in FIG. 13, in the present embodiment 5, for example, the stacking positions of the core pieces 201 and the core pieces 202 shown in FIG. 9 and FIG. 10 in the above embodiment 2 are adjusted, whereby, in the through hole 6, the positioning portion 4 is formed at only a position of a center part in the axial direction Y of the rotor core 20.

Thus, since the positioning portion 4 is provided at only a position of a center part in the length in the axial direction Y of the rotor core 20, positioning can be performed at a part corresponding to the average of all stacking displacements of the rotor core 20, and positioning can be performed at a smaller number of positioning parts in accordance with required accuracy for the rotor core 20. In addition, since the positioning portion 4 is provided at only a position of a center part in the length in the axial direction Y, for example, as shown in FIG. 14, the length in the axial direction Y of the positioning pin 50 can be shortened, whereby deformation or the like of the positioning pin 50 in assembling can be suppressed.

In the rotor according to embodiment 5 configured as described above, the same effects as in the above embodiments are provided, and in addition,
the positioning portion is formed at only a position of a center part in the axial direction of the rotor core.

Thus, positioning can be performed at a smaller number of positioning parts, and even if the length in the axial direction of the positioning pin is short, positioning of the rotor core can be performed.

### Embodiment 6

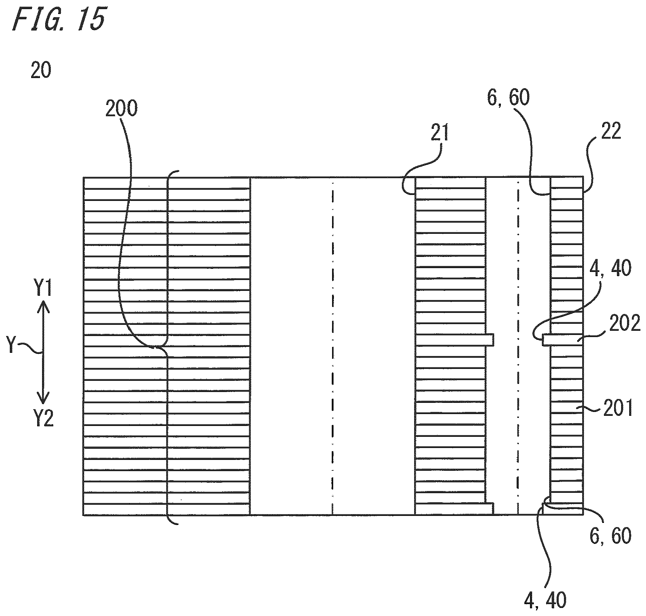

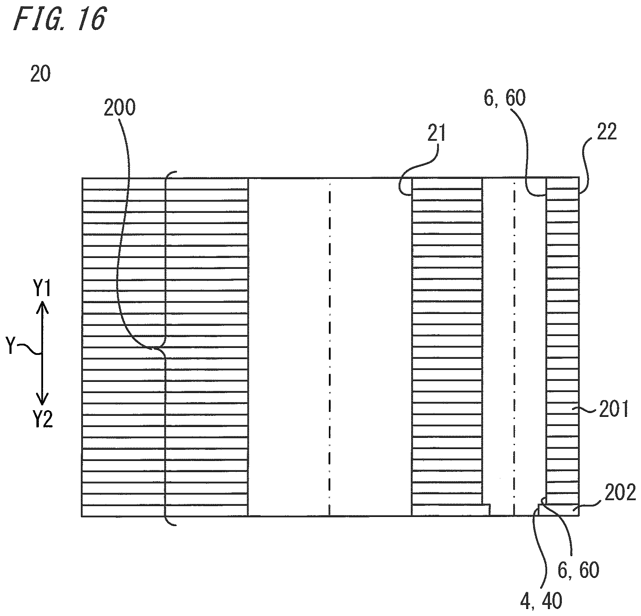

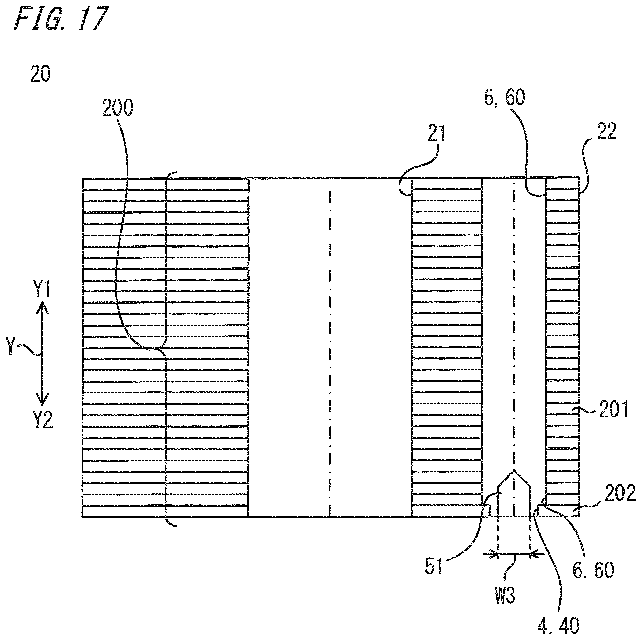

FIG. 15, FIG. 16, FIG. 18, and FIG. 19 are vertical sectional views showing various examples of configurations of a rotor core of a rotor according to embodiment 6. FIG. 17 is a vertical sectional view showing a state in which a positioning pin is inserted into the rotor core shown in FIG. 16. In the drawings, the same parts as in the above embodiments are denoted by the same reference characters, and the description thereof is omitted. In the above embodiments 3 and 4, the case of forming the positioning portions 4 at positions on both end sides in the axial direction Y has been shown. However, without limitation thereto, in the present embodiment 6, for example, the stacking positions of the core pieces 201 and the core pieces 202 shown in FIG. 9 and FIG. 10 in the above embodiment 2 are adjusted, whereby, as shown in the drawings, the positioning portion 4 is formed at a position on one end surface side in the axial direction Y of the rotor core 20.

In FIG. 15, the positioning portions 4 of the through hole 6 are formed at only a position on the reception surface side Y2 and a position of a center part in the axial direction Y of the rotor core 20. In this configuration, as compared to a case where the positioning portions 4 are formed at positions on both end sides in the axial direction Y, the influence of stacking displacement or the like is reduced, and the length of the positioning pin 50 can be shortened as in the case shown in FIG. 14 in the above embodiment 5.

In another example in FIG. 16, the positioning portion 4 of the through hole 6 is formed at only a position on the reception surface side Y2 in the axial direction Y of the rotor core 20. In this configuration, the influence of stacking displacement can be minimized, and the length of the positioning pin 51 can be further shortened as shown in FIG. 17, for example.

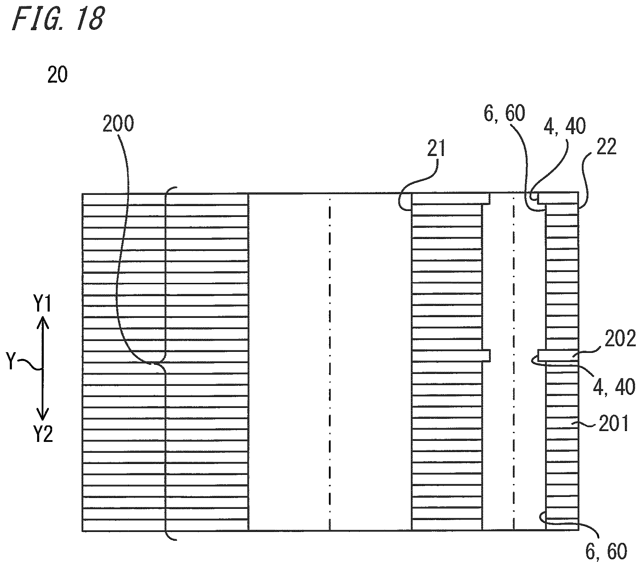

In another example in FIG. 18, the positioning portions 4 of the through hole 6 are formed at only a position on the press-fit start side Y1 and a position of a center part in the axial direction Y of the rotor core 20. In this configuration, although the length of the positioning pin 5 increases, positioning can be performed at a part near the press-fit start position, whereby galling when the rotary shaft 1 is press-fitted can be suppressed.

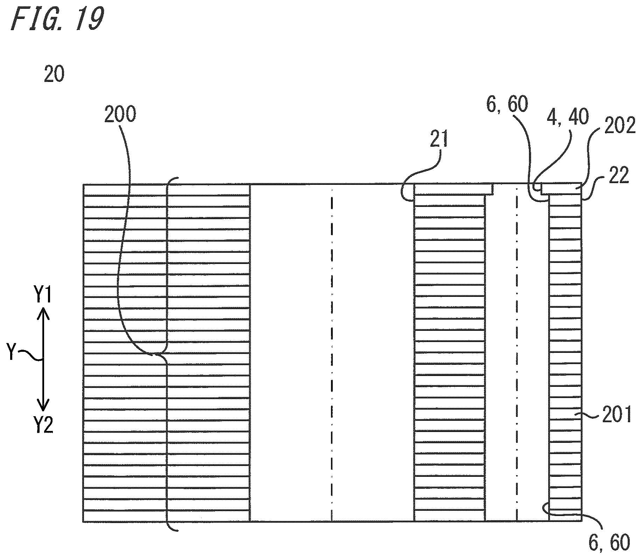

In another example in FIG. 19, the positioning portion 4 of the through hole 6 is formed at only a position on the press-fit start side Y1 in the axial direction Y of the rotor core 20. In this configuration, the influence of stacking displacement or the like can be minimized, and galling when the rotary shaft 1 is press-fitted can be suppressed.

In the rotor according to embodiment 6 configured as described above, the same effects as in the above embodiments are provided, and in addition,
the positioning portion is formed at a position on one end surface side in the axial direction of the rotor core.

Thus, positioning can be performed at a smaller number of positioning parts.

### Embodiment 7

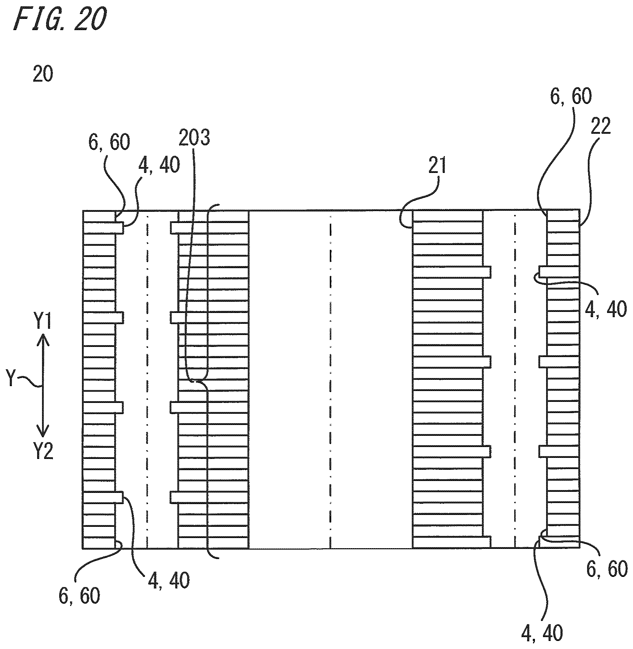

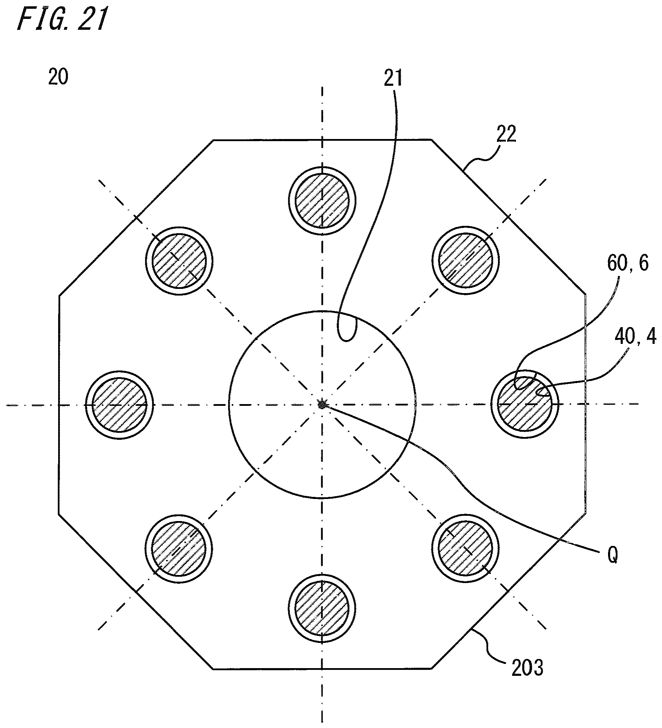

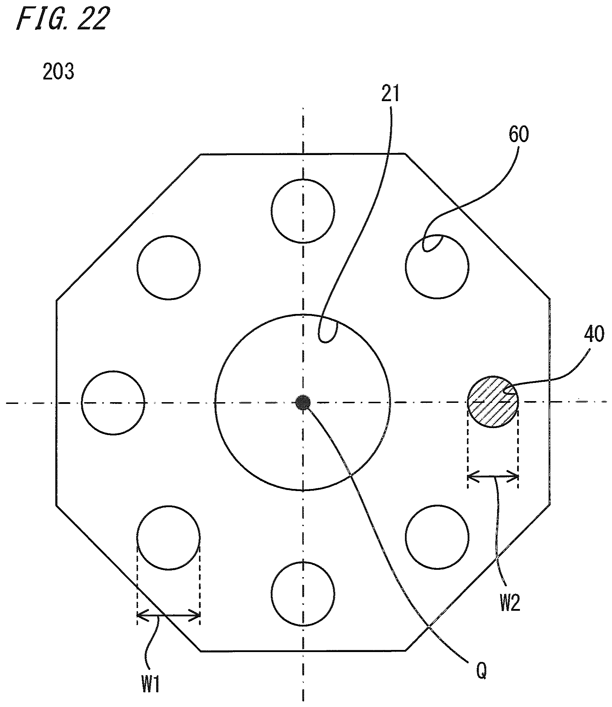

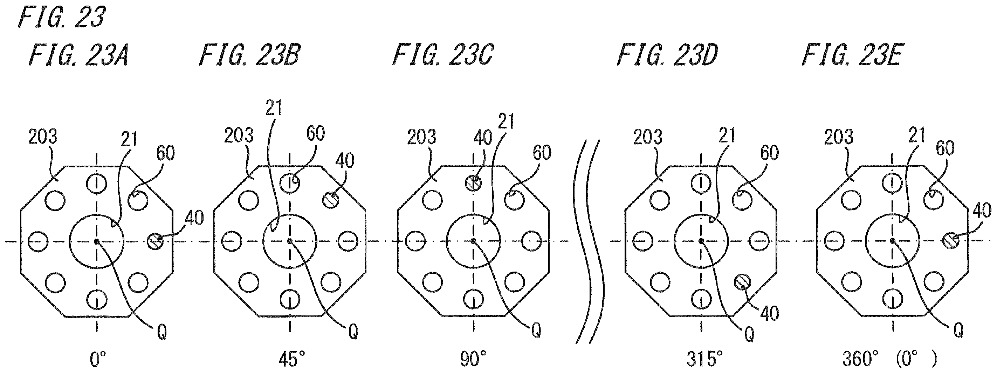

FIG. 20 is a vertical sectional view showing a configuration of a rotor core of a rotor according to embodiment 7. FIG. 21 is a plan view showing a configuration of the rotor core shown in FIG. 20. FIG. 22 is a plan view showing a configuration of a core piece of the rotor core shown in FIG. 20. FIG. 23 is a plan view showing a configuration of the core piece of the rotor core shown in FIG. 20. FIG. 23A shows a state in which the core piece is at an angle of 0° as a reference in rotation about a center point Q at the center of the rotary shaft 1, and FIG. 23B to FIG. 23E show states of each being rotated by a predetermined rotation angle counterclockwise from the state of FIG. 23A, and are plan views showing states of being rotated on a 45° basis, i.e., 45° in FIG. 23B, 90° in FIG. 23C, ..., 315° in FIG. 23D, and one revolution = 360° (return to 0°) in FIG. 23E.

In the drawings, the same parts as in the above embodiments are denoted by the same reference characters, and the description thereof is omitted. As shown in FIG. 22, in one kind of core piece 203, each core piece 203 has both of the through opening 60 to form the through hole 6 and the positioning opening 40 to form the positioning portion 4. A plurality of, here, seven through openings 60 are arranged in the circumferential direction, and one positioning opening 40 is provided. The seven through openings 60 and the one positioning opening 40 are formed at intervals of a predetermined angle 45° in the circumferential direction.

As shown in FIG. 23A to FIG. 23E, the core piece 203 shown in FIG. 22 is rotated about the center point Q at intervals of a rotation angle 45°, while being sequentially stacked from the reception surface side Y2 in the axial direction Y as shown in FIG. 20. As a result, the positioning portions 4 are formed in all the through holes 6 of the rotor core 20 as shown in FIG. 21. Here, as an example, the rotor 2 having eight poles is shown. In the above example, the case where the rotation angle is 45° has been shown. However, without limitation thereto, any angle that is an integer multiple of 45°, for example, can be applied.

Thus, one kind of core piece 203 having both of the through opening 60 and the positioning opening 40 is stacked while being rotated in each layer, whereby it becomes possible to provide the positioning portion 4 at a part in every through hole 6, so that the die configuration for performing press work for the core piece 203 can be simplified and the die cost therefor can be reduced. Here, the rotor 2 having eight poles has been shown as an example and the rotation angle in rotational stacking is described as 45° (= 360°÷8 poles). However, the rotation angle may be set in accordance with the number of poles, whereby the rotor 2 having any number of poles can be applied.

In the rotor according to embodiment 7 configured as described above, the same effects as in the above embodiments are provided, and in addition,
the rotor core has a plurality of the through holes arranged at predetermined intervals in the circumferential direction,
each core piece has a plurality of through openings to form a plurality of the through holes, and a positioning opening to form the positioning portion, and
the rotor core is formed by stacking the core pieces rotationally about the rotary shaft.

Thus, it is possible to easily form the positioning portions in all the through holes merely by rotationally stacking one kind of core piece sequentially. In addition, since only one kind of core piece is used, the number of kinds of dies for manufacturing the core piece is only one and thus the manufacturing cost can be reduced.

### Embodiment 8

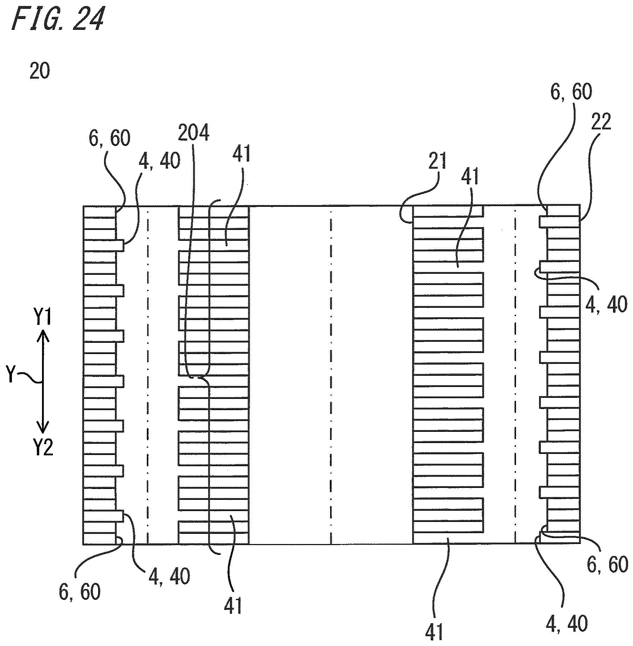

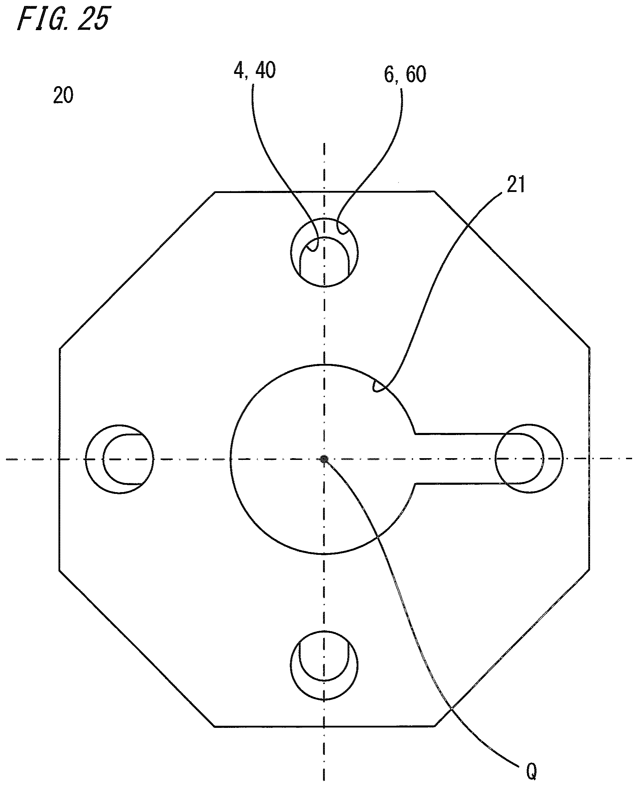

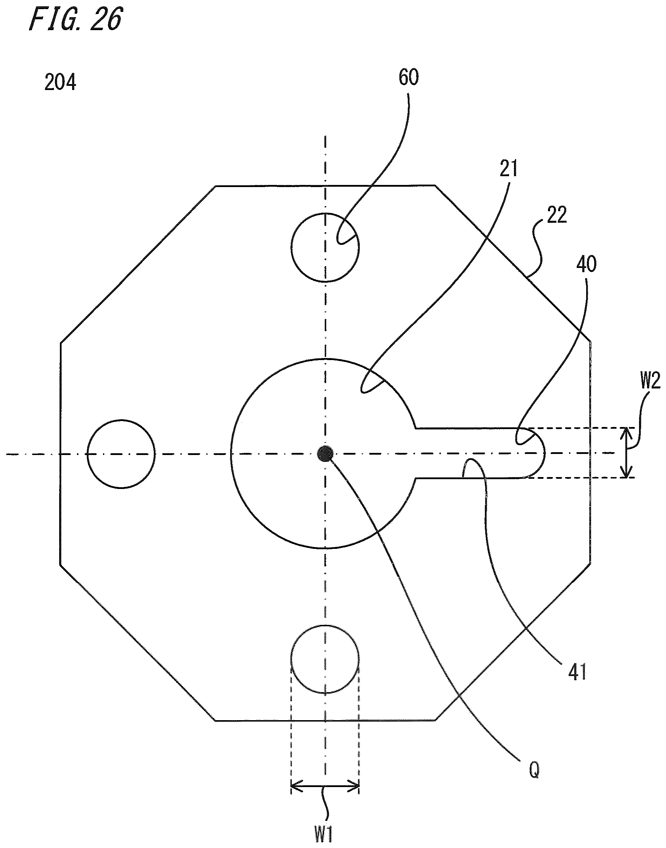

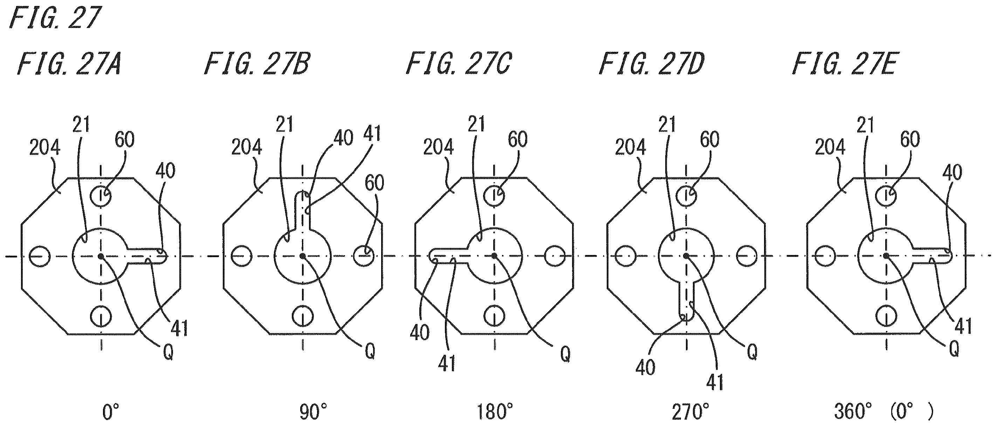

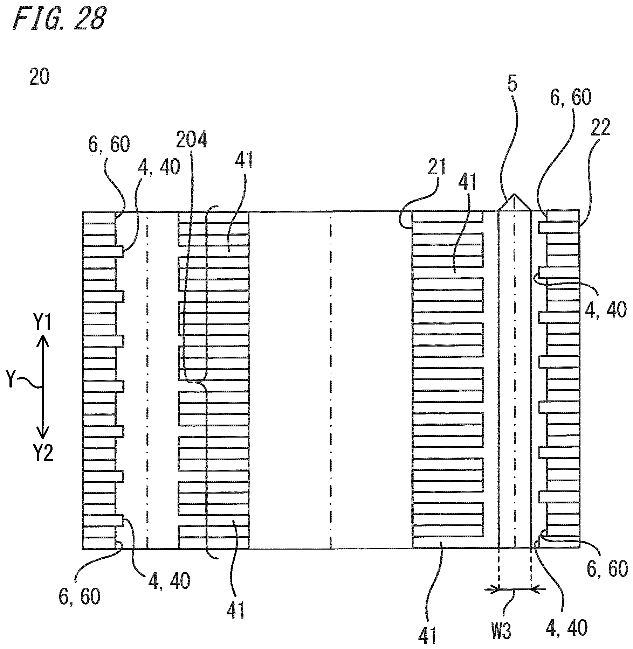

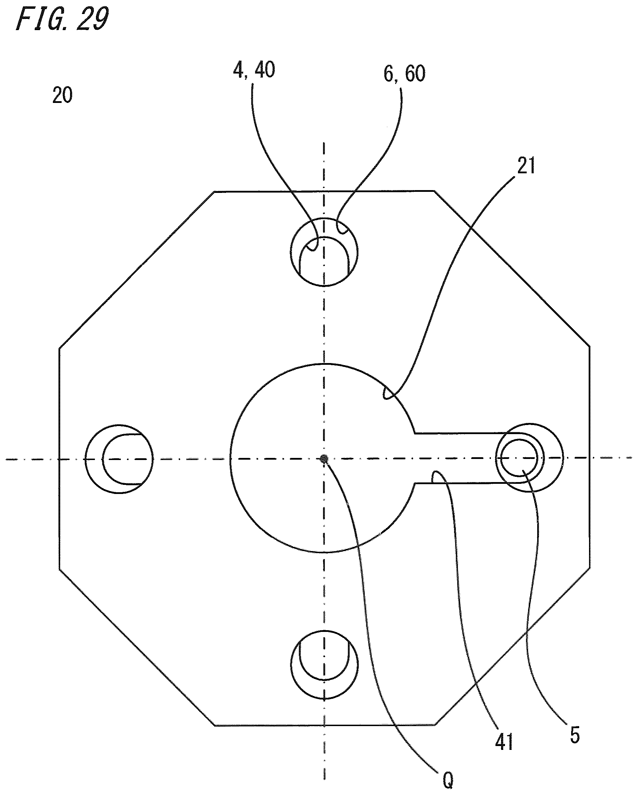

FIG. 24 is a vertical sectional view showing a configuration of a rotor core of a rotor according to embodiment 8. FIG. 25 is a plan view showing a configuration of the rotor core shown in FIG. 24, as seen from the reception surface side Y2 in the axial direction Y. FIG. 26 is a plan view showing a configuration of a core piece of the rotor core shown in FIG. 24. FIG. 27 is a plan view showing a configuration of the core piece of the rotor core shown in FIG. 24. FIG. 27A shows a state in which the core piece is at an angle of 0° as a reference in rotation about a center point Q at the center of the rotary shaft 1, and FIG. 27B to FIG. 27E show states of each being rotated by a predetermined rotation angle counterclockwise from the state of FIG. 27A, and are plan views showing states of being rotated by 90° in FIG. 27B, 180° in FIG. 27C, 270° in FIG. 27D, and one revolution = 360° (return to 0°) in FIG. 27E. FIG. 28 is a vertical sectional view showing a state in which a positioning pin is inserted into the rotor core shown in FIG. 24. FIG. 29 is a plan view showing a state in which the positioning pin is inserted into the rotor core shown in FIG. 25.

In the above embodiments, the configuration in which the positioning portion 4 does not communicate with any part on a plane has been shown. However, without limitation thereto, in the present embodiment 8, a case where the positioning portion 4 has a cutout 41 connected to the press-fit hole 21 will be described. In the drawings, the same parts as in the above embodiments are denoted by the same reference characters, and the description thereof is omitted.

As shown in FIG. 26, in one kind of core piece 204, each piece has both of the through opening 60 to form the through hole 6 and the positioning opening 40 to form the positioning portion 4. Three through openings 60 are arranged in the circumferential direction, and one positioning opening 40 is provided. The three through openings 60 and the one positioning opening 40 are formed at intervals of a predetermined angle 90° in the circumferential direction. The positioning opening 40 has the cutout 41 connected to the press-fit hole 21.

As shown in FIG. 27A to FIG. 27E, the core piece 204 is rotated about the center point Q at intervals of a rotation angle 90°, while being sequentially stacked from the reception surface side Y2 in the axial direction Y as shown in FIG. 24. As a result, the positioning portions 4 are formed in all the through holes 6 of the rotor core 20 as shown in FIG. 25.

Thus, one kind of core piece 204 having both of the through opening 60 and the positioning opening 40 is stacked while being rotated in each layer, whereby it becomes possible to provide the positioning portion 4 at a part in each through hole 6, so that the die configuration for performing press work for the core piece 204 can be simplified and the die cost therefor can be reduced.

As shown in FIG. 28 and FIG. 29, the positioning pin 5 is inserted into the through hole 6 of the rotor core 20 as in the above embodiments, whereby the rotor 2 can be manufactured.

In a case of manufacturing the core piece 204 of the rotor core 20 by a press, if the size of the positioning opening 40 of the core piece 204 is small and thus it is difficult to ensure the strength of a die for stamping the positioning opening 40, the cutout 41 is formed at the positioning opening 40 as described in the present embodiment 8 so as to make the size as large as possible, whereby the strength of the die can be ensured.

In the rotor according to embodiment 8 configured as described above, the same effects as in the above embodiments are provided, and in addition,
the positioning portion has a cutout connected to the press-fit hole of the rotor core.

Thus, the positioning portion can be easily formed in the through hole and the manufacturing cost can be reduced.

### Embodiment 9

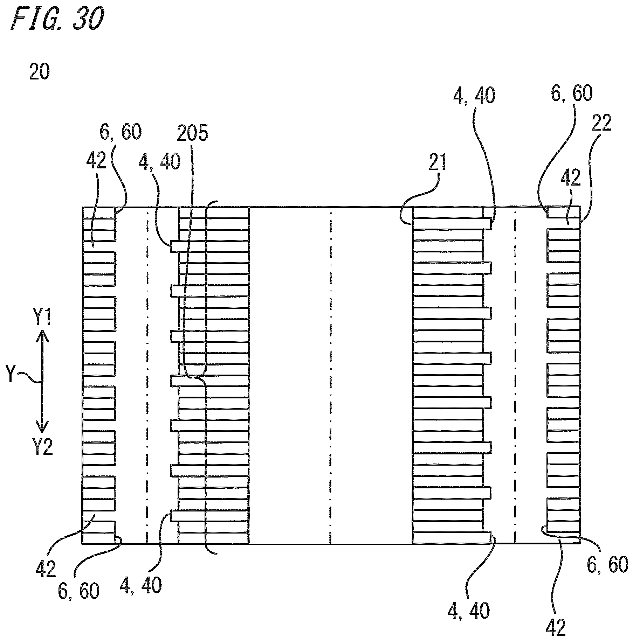

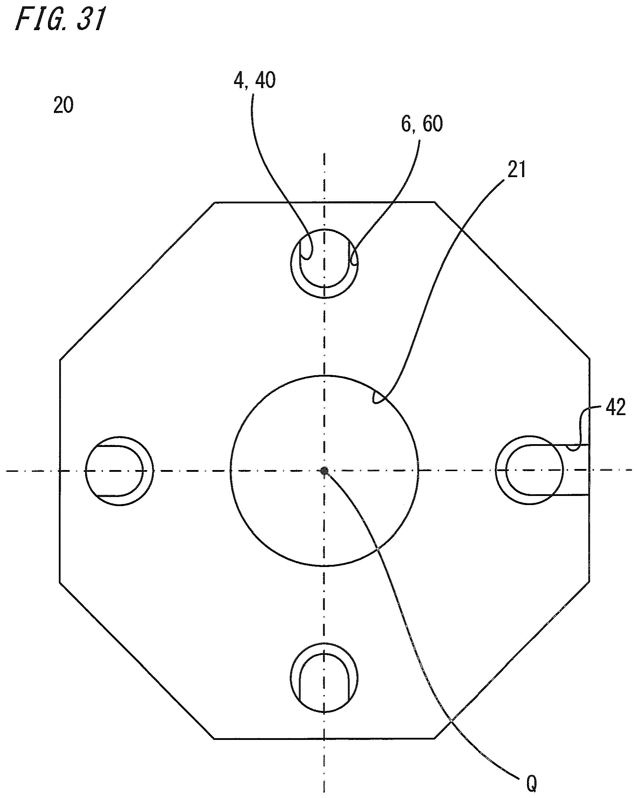

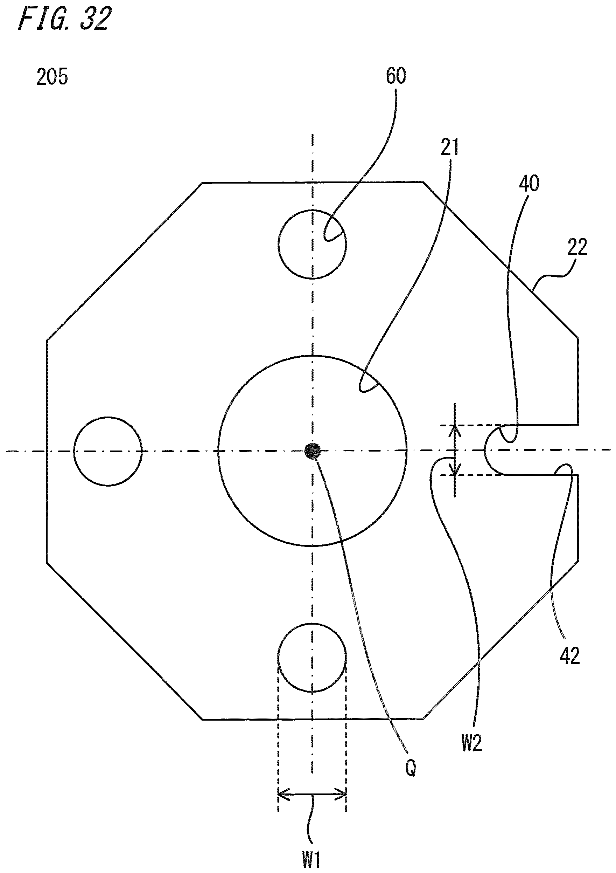

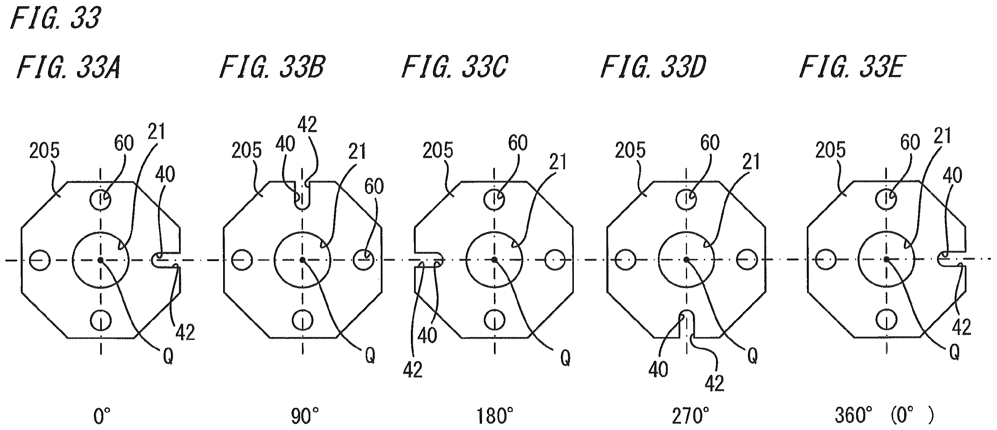

FIG. 30 is a vertical sectional view showing a configuration of a rotor core of a rotor according to embodiment 9. FIG. 31 is a plan view showing a configuration of the rotor core shown in FIG. 30, as seen from the reception surface side Y2 in the axial direction Y. FIG. 32 is a plan view showing a configuration of the core piece of the rotor core shown in FIG. 30. FIG. 32 is a plan view showing a configuration of the core piece of the rotor core shown in FIG. 30. FIG. 33A shows a state in which the core piece is at an angle of 0° as a reference in rotation about a center point Q at the center of the rotary shaft 1, and FIG. 33B to FIG. 33E show states of each being rotated by a predetermined rotation angle counterclockwise from the state of FIG. 33A, and are plan views showing states of being rotated by 90° in FIG. 33B, 180° in FIG. 33C, 270° in FIG. 33D, and one revolution = 360° (return to 0°) in FIG. 33E.

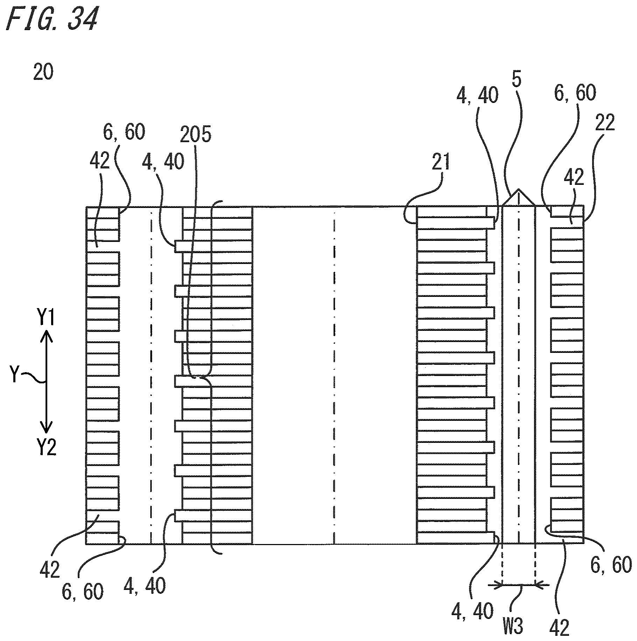

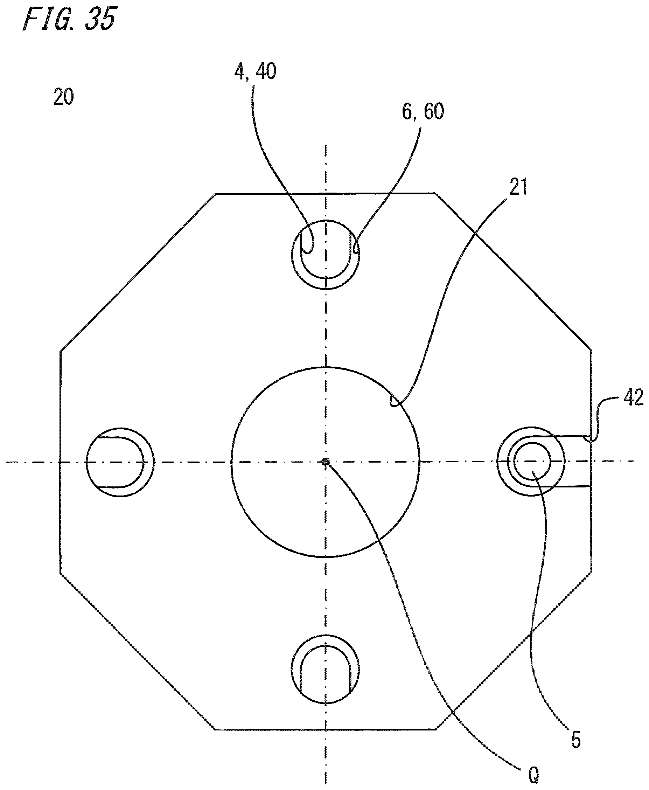

FIG. 34 is a vertical sectional view showing a state in which a positioning pin is inserted into the rotor core shown in FIG. 30. FIG. 35 is a plan view showing a state in which the positioning pin is inserted into the rotor core shown in FIG. 31.

In the above embodiment 8, the case where the positioning portion 4 has the cutout 41 connected to the press-fit hole 21 has been shown, whereas in the present embodiment 9, a case where the positioning portion 4 has a cutout 42 connected to the outer circumferential surface 22 will be described. In the drawings, the same parts as in the above embodiments are denoted by the same reference characters, and the description thereof is omitted.

As shown in FIG. 32, in one kind of core piece 205, each piece has both of the through opening 60 to form the through hole 6 and the positioning opening 40 to form the positioning portion 4. Three through openings 60 are arranged in the circumferential direction, and one positioning opening 40 is provided. The three through openings 60 and the one positioning opening 40 are formed at intervals of a predetermined angle 90° in the circumferential direction. The positioning opening 40 has the cutout 42 connected to the outer circumferential surface 22.

As shown in FIG. 33A to FIG. 33E, the core piece 205 is rotated about the center point Q at intervals of a rotation angle 90°, while being sequentially stacked from the reception surface side Y2 in the axial direction Y as shown in FIG. 30. As a result, the positioning portions 4 are formed in all the through holes 6 of the rotor core 20 as shown in FIG. 31.

Thus, one kind of core piece 205 having both of the through opening 60 and the positioning opening 40 is stacked while being rotated in each layer, whereby it becomes possible to provide the positioning portion 4 at a part in every through hole 6, so that the die configuration for performing press work for the core piece 205 can be simplified and the die cost therefor can be reduced.

As shown in FIG. 34 and FIG. 35, the positioning pin 5 is inserted into the through hole 6 of the rotor core 20 as in the above embodiments, whereby the rotor 2 can be manufactured.

In a case of manufacturing the core piece 205 of the rotor core 20 by a press, if the size of the positioning opening 40 of the core piece 205 is small and thus it is difficult to ensure the strength of a die for stamping the positioning opening 40, the cutout 42 is formed at the positioning opening 40 as described in the present embodiment 9 so as to make the size as large as possible, whereby the strength of the die can be ensured.

In the rotor according to embodiment 9 configured as described above, the same effects as in the above embodiments are provided, and in addition,
the positioning portion has a cutout connected to the outer circumferential surface of the rotor core.

Thus, the positioning portion can be easily formed in the through hole and the manufacturing cost can be reduced.

### Embodiment 10

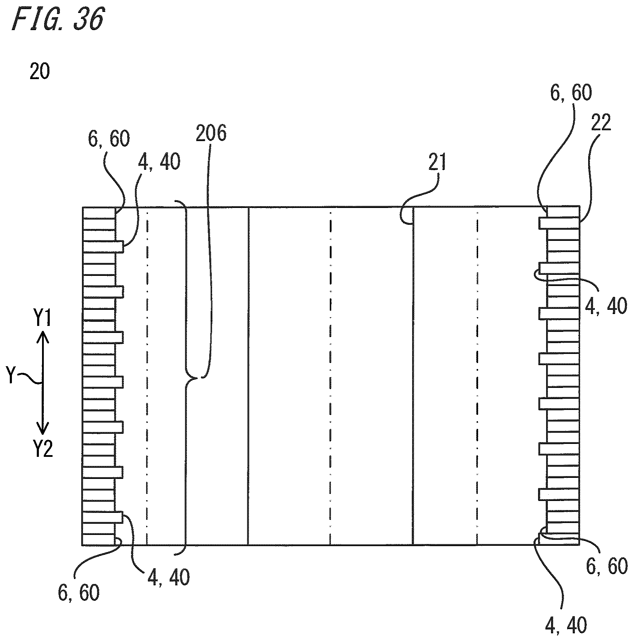

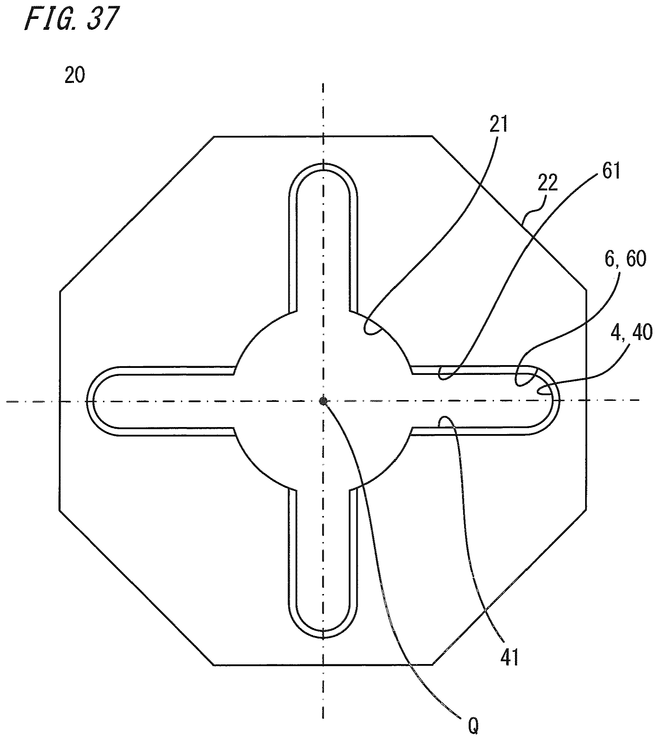

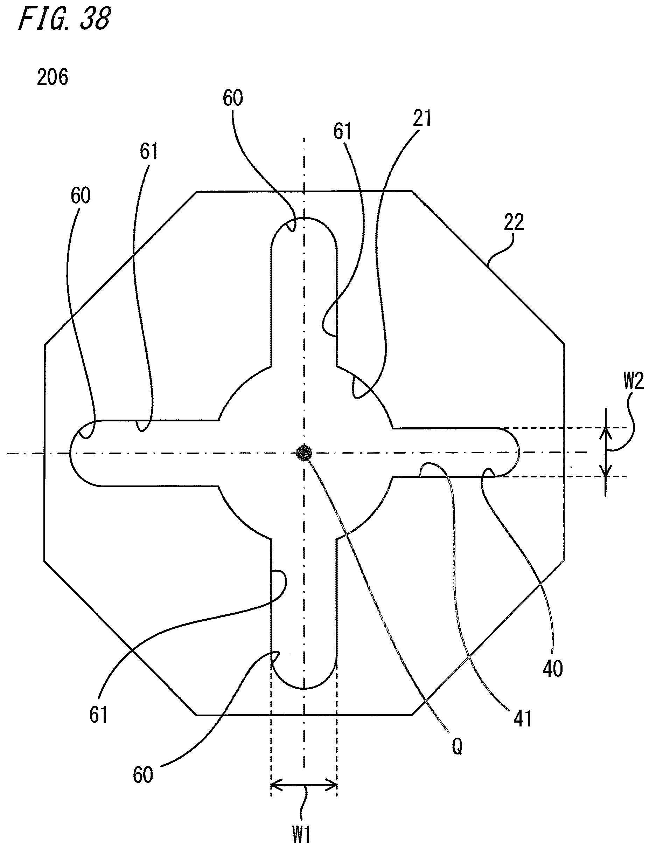

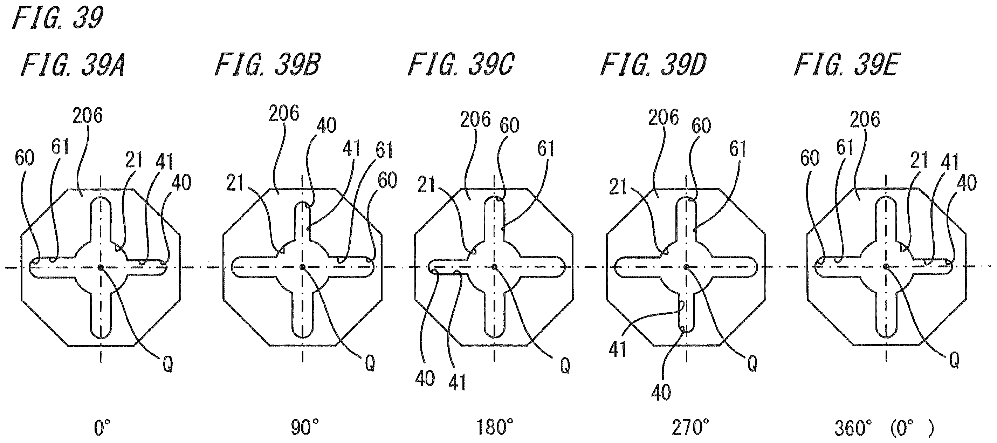

FIG. 36 is a vertical sectional view showing a configuration of a rotor core of a rotor according to embodiment 10. FIG. 37 is a plan view showing a configuration of the rotor core shown in FIG. 36. FIG. 38 is a plan view showing a configuration of the core piece of the rotor core shown in FIG. 36. FIG. 39 is a plan view showing a configuration of the core piece of the rotor core shown in FIG. 36. FIG. 39A shows a state in which the core piece is at an angle of 0° as a reference in rotation about a center point Q at the center of the rotary shaft 1, and FIG. 39B to FIG. 39E show states of each being rotated by a predetermined rotation angle counterclockwise from the state of FIG. 39A, and are plan views showing states of being rotated by 90° in FIG. 39B, 180° in FIG. 39C, 270° in FIG. 39D, and one revolution = 360° (return to 0°) in FIG. 39E.

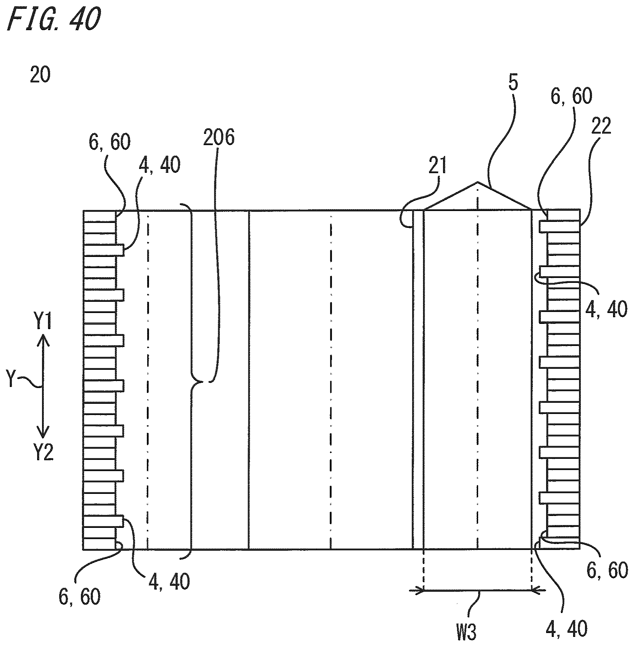

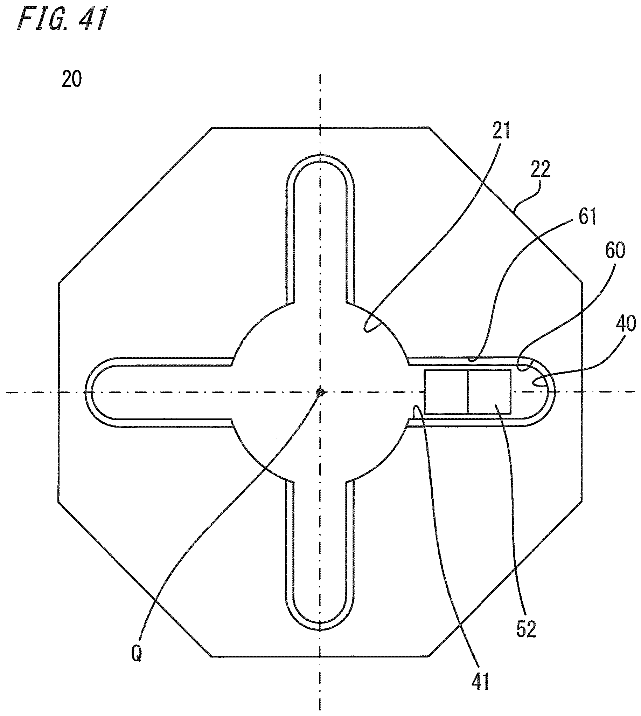

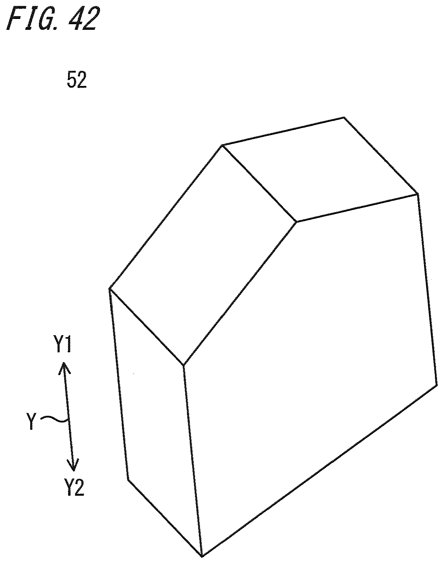

FIG. 40 is a vertical sectional view showing a state in which a positioning pin is inserted into the rotor core shown in FIG. 36. FIG. 41 is a plan view showing a state in which the positioning pin is inserted into the rotor core shown in FIG. 37. FIG. 42 is a perspective view showing a configuration of the positioning pin shown in FIG. 40.

In the above embodiment 8, the case where only the positioning portion 4 has the cutout 41 connected to the press-fit hole 21 has been shown, whereas in the present embodiment 10, a case where, in addition to the positioning portion 4 having the cutout 41, the through holes 6 have cutouts 61 connected to the press-fit hole 21, will be described. In the drawings, the same parts as in the above embodiments are denoted by the same reference characters, and the description thereof is omitted.

As shown in FIG. 38, in one kind of core piece 206, each piece has both of the through opening 60 to form the through hole 6 and the positioning opening 40 to form the positioning portion 4. Three through openings 60 are arranged in the circumferential direction, and one positioning opening 40 is provided. The three through openings 60 and the one positioning opening 40 are formed at intervals of a predetermined angle 90° in the circumferential direction. The through opening 60 has the cutout 61 connected to the press-fit hole 21, and the positioning opening 40 has the cutout 41 connected to the press-fit hole 21.

As shown in FIG. 39A to FIG. 39E, the core piece 206 is rotated about the center point Q at intervals of a rotation angle 90°, while being sequentially stacked from the reception surface side Y2 in the axial direction Y as shown in FIG. 32. As a result, the positioning portions 4 are formed in all the through holes 6 of the rotor core 20 as shown in FIG. 33.

Thus, one kind of core piece 206 having both of the through opening 60 and the positioning opening 40 is stacked while being rotated in each layer, whereby it becomes possible to provide the positioning portion 4 at a part in every through hole 6, so that the die configuration for performing press work for the core piece 206 can be simplified and the die cost therefor can be reduced.

As shown in FIG. 40 and FIG. 41, a positioning pin 52 is inserted into the through hole 6 of the rotor core 20. At this time, since the positioning opening 40 and the through opening 60 are connected to the press-fit hole 21 via the cutouts 41 and 61, the positioning pin 52 as shown in FIG. 42 can be used. The sectional area of the positioning pin 52 along a direction perpendicular to the rotary shaft 1 is larger than those of the positioning pins 5, 50, and 51 in the above embodiments. Thus, rigidity of the positioning pin 52 can be increased. Therefore, deformation or the like of the positioning pin 52 in assembling can be suppressed. In the other processes, the rotor 2 can be manufactured by the rotary shaft 1 being inserted in the same manner as in the above embodiments.

In the rotor according to embodiment 10 configured as described above, the same effects as in the above embodiments are provided, and in addition,
the positioning portion has a cutout connected to the press-fit hole of the rotor core, and
the through hole has a cutout connected to the press-fit hole of the rotor core.

Thus, a positioning pin having a large sectional area can be inserted into the through hole via the cutouts.

### Embodiment 11

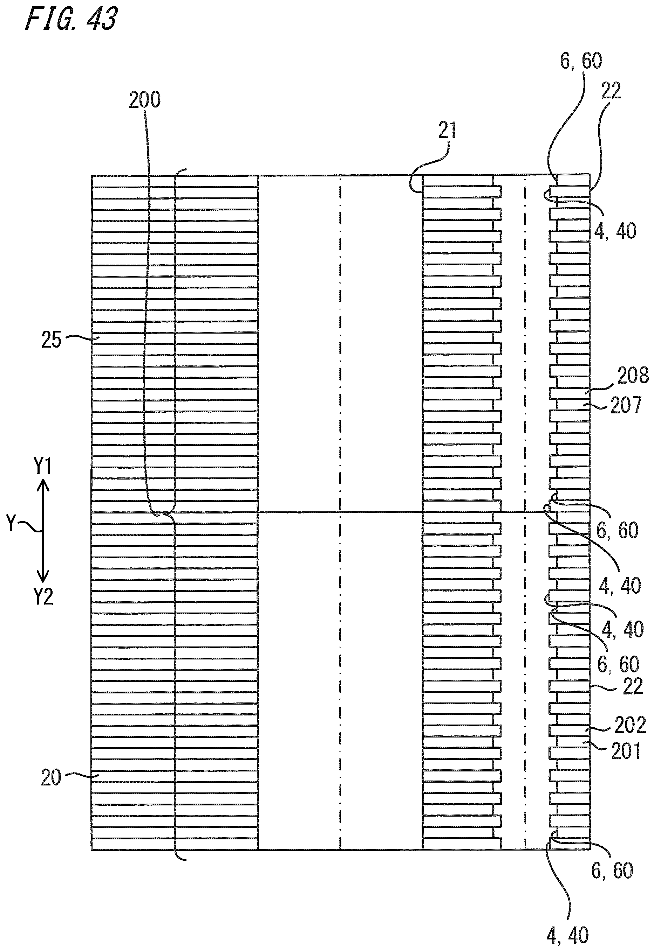

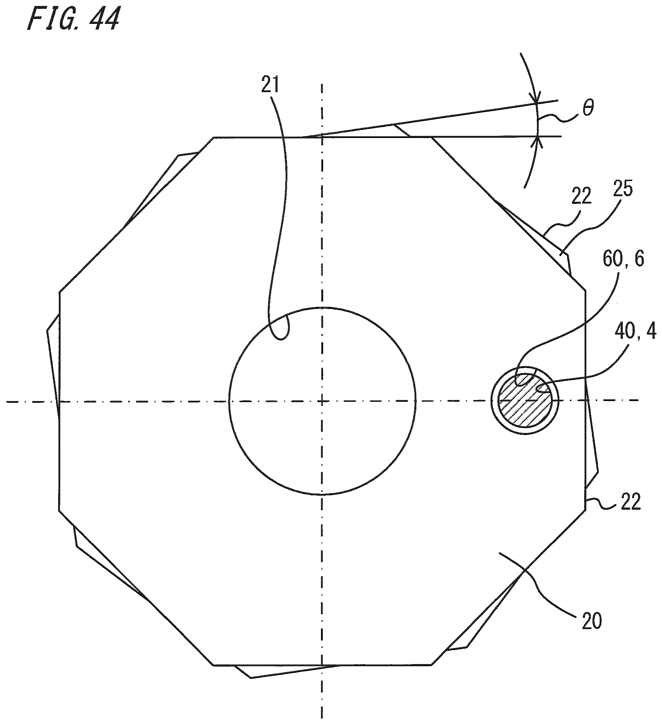

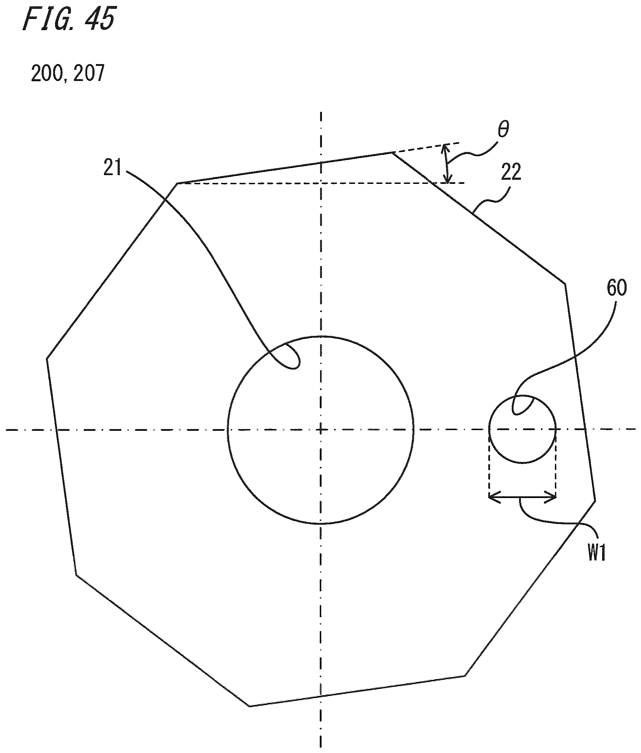

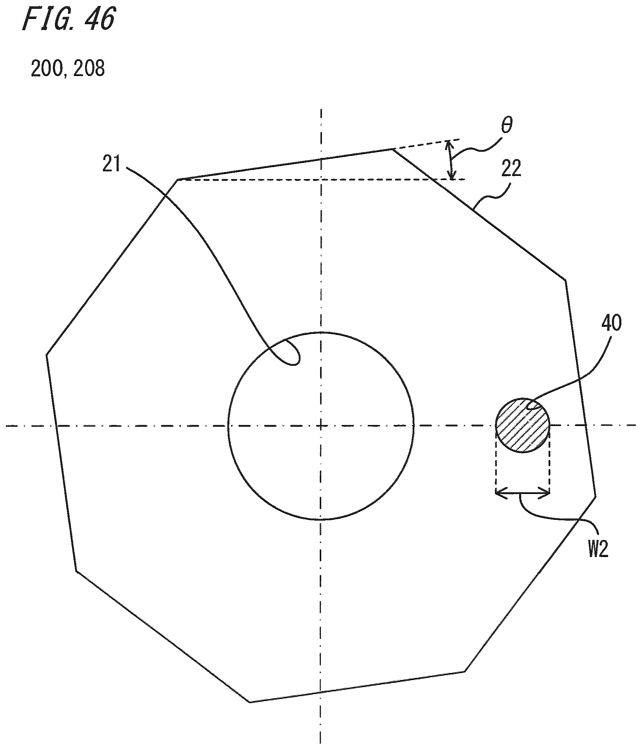

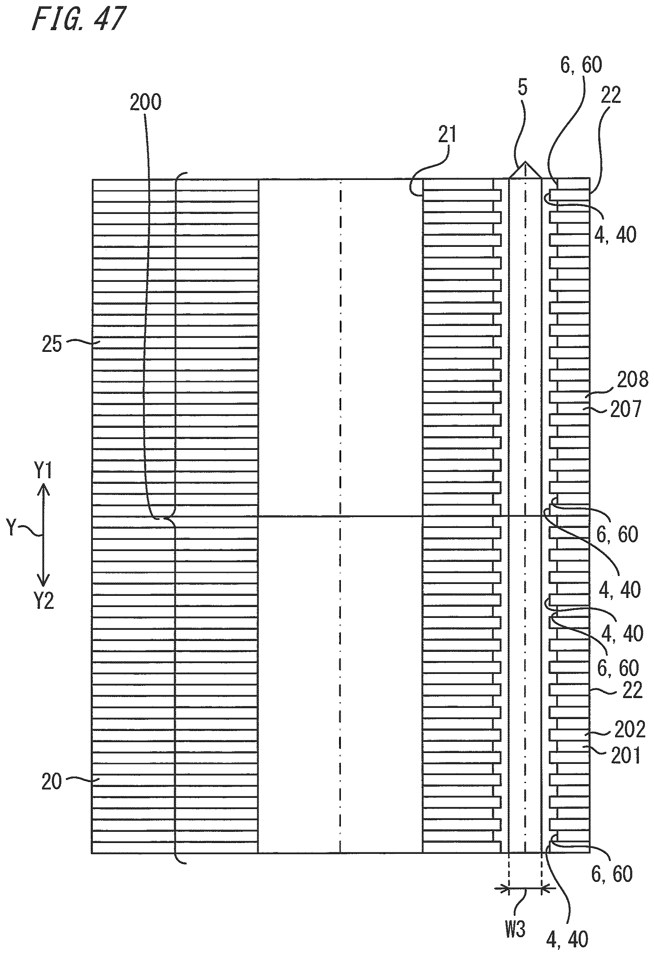

FIG. 43 is a vertical sectional view showing a configuration of a rotor core of a rotor according to embodiment 11. FIG. 44 is a plan view showing a configuration of the rotor core shown in FIG. 43, as seen from the reception surface side Y2 in the axial direction Y. FIG. 45 and FIG. 46 are plan views showing a configuration of a core piece of the rotor core shown in FIG. 43. FIG. 47 is a vertical sectional view showing a state in which a positioning pin is inserted into the rotor core shown in FIG. 43.

In the above embodiments, the case where one rotor core 20 is provided to the rotary shaft 1 has been shown. However, without limitation thereto, a case where a plurality of rotor cores 20 and 25 are arranged in the axial direction Y along the rotary shaft 1 while being shifted from each other in the circumferential direction by a predetermined phase angle, will be described. In the drawings, the same parts as in the above embodiments are denoted by the same reference characters, and the description thereof is omitted.

As shown in FIG. 43 and FIG. 44, the rotor 2 has a two-stage skew structure with eight poles and includes rotor cores 20 and 25. The rotor core 20 provided on the reception surface side Y2 in the axial direction Y is the rotor core 20 shown in FIG. 7 in the above embodiment 2, and is formed using the core piece 201 shown in FIG. 9 and the core piece 202 shown in FIG. 10. The rotor core 20 and a rotor core 25 which is shifted in the circumferential direction by a certain phase angle (skew angle) θ relative to the rotor core 20, are fixed to the rotary shaft 1.

The core pieces 200 of the rotor core 25 include a plurality of kinds. One kind of core piece 207 shown in FIG. 45 has the through opening 60 to form the through hole 6. Another kind of core piece 208 shown in FIG. 46 has the positioning opening 40 to form the positioning portion 4. The diameter of the through opening 60 is the diameter W1, and the diameter of the positioning opening 40 is the diameter W2, thus having the same relationship as in the above embodiments. The rotor core 25 is formed by stacking a plurality of the core pieces 200 in the axial direction Y. The plurality of core pieces 200 are fixed to each other in the axial direction Y by a fixation portion, e.g., a swage.

In the rotor core 25, the core pieces 207 and the core pieces 208 are stacked alternately in the axial direction Y, whereby, as shown in FIG. 43, the through hole 6 having the positioning portion 4 is formed at every second piece in the axial direction Y among the core pieces 200.

As is found from comparison between the core piece 207 shown in FIG. 45 and the core piece 201 shown in FIG. 9 and comparison between the core piece 208 shown in FIG. 46 and the core piece 202 shown in FIG. 10, the through opening 60 and the positioning opening 40 are respectively formed at the same positions on a plane perpendicular to the axial direction Y. Therefore, in the core pieces 201, 201, 207, and 208, the through hole 6 having the positioning portions 4 is formed so as to penetrate in the axial direction Y, as shown in FIG. 43. Thus, as shown in FIG. 43, the positioning pin 53 is inserted into the through hole 6 as in the above embodiments, whereby movement in the horizontal direction is restricted by the positioning portions 4.

In FIG. 43, the case where the core pieces 208 having the positioning openings 40 and the core pieces 207 having the through openings 60 are stacked alternately in the axial direction Y, has been shown. However, the positioning portion 4 in the through hole 6 can be set at any position in the axial direction Y by adjusting a die configuration and a stacking program for performing press work for the core piece 200.

In the case where a plurality of rotor cores 20 and 25 are stacked in the axial direction Y while being shifted from each other by a predetermined phase angle θ, accuracy of the phase angle θ influences torque ripple variations in the rotary electrical machine 100. Therefore, positioning accuracy for the rotor cores 20 and 25 is important. By applying the present embodiment, it becomes possible to perform assembling with high positioning accuracy.

In the present embodiment, the case of the two-stage skew structure with eight poles has been shown. However, without limitation thereto, the number of poles and the number of stages may be any numbers. For example, a three-stage skew structure with ten poles is also applicable. As the number of stages of the stage skew structure increases, the dimensional tolerances of the rotor cores 20 and 25 are accumulated and thus ease of assembly is deteriorated. Therefore, the present disclosure which enables improvement in positioning accuracy is more effective.

In the rotor according to embodiment 11 configured as described above, the same effects as in the above embodiments are provided, and in addition,
a plurality of the rotor cores are arranged in the axial direction of the rotary shaft,
the plurality of rotor cores are fixed to the rotary shaft while being shifted from each other by a predetermined phase angle, and
the through holes of the plurality of rotor cores are formed so as to communicate with each other in the axial direction in a state in which the rotor cores are skewed relative to each other.

Thus, even in a case where a plurality of rotor cores are arranged in the axial direction, the dimensional tolerances of the positioning portions of the rotor cores can be reduced, and a stator of a rotary electrical machine can be assembled with performance variations reduced.

### Embodiment 12

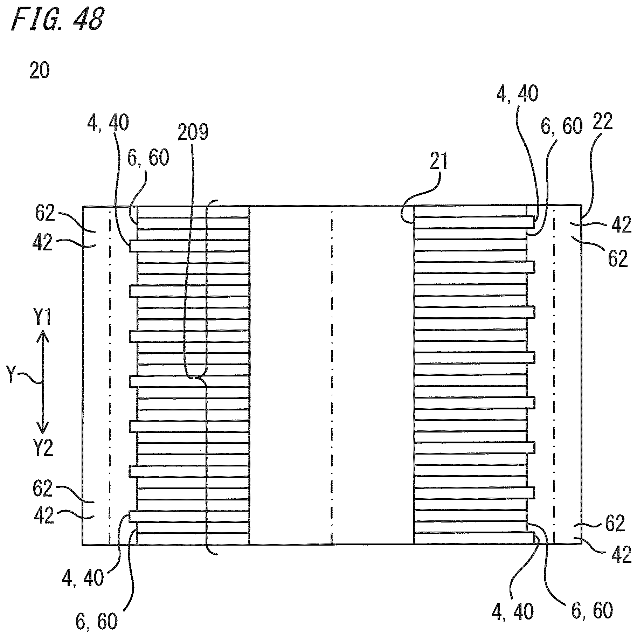

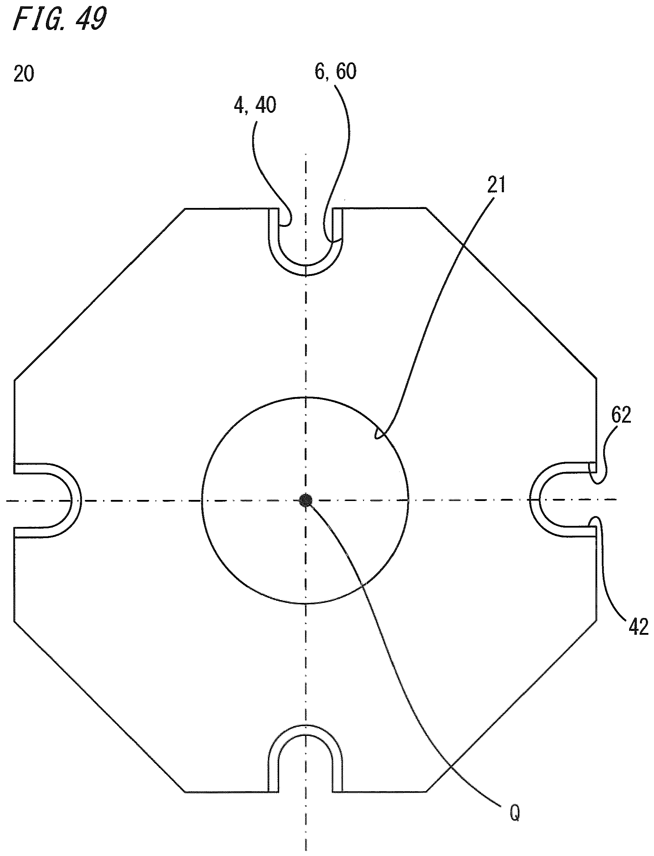

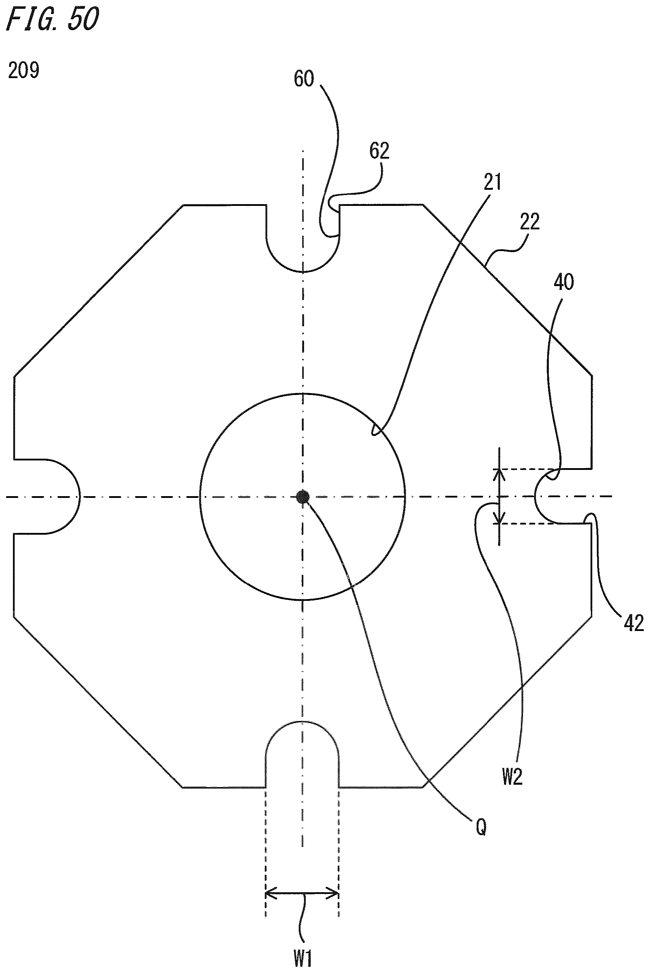

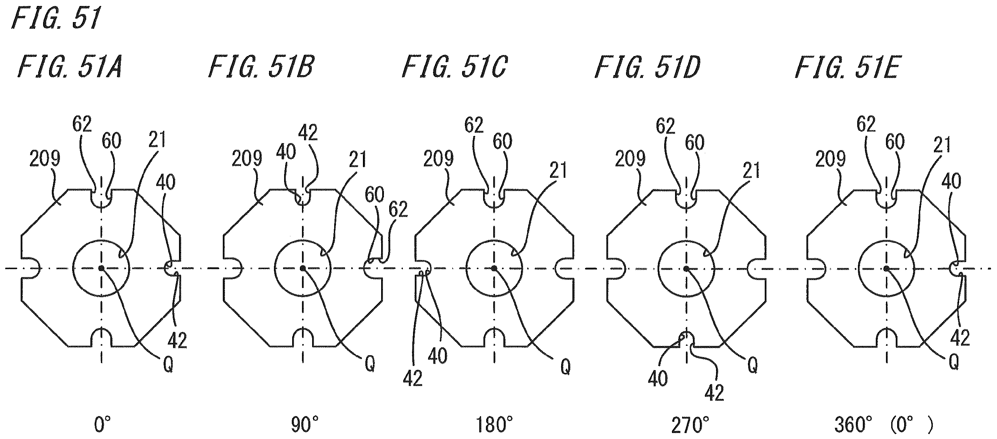

FIG. 48 is a vertical sectional view showing a configuration of a rotor core of a rotor according to embodiment 12. FIG. 49 is a plan view showing a configuration of the rotor core shown in FIG. 48, as seen from the reception surface side Y2 in the axial direction Y. FIG. 50 is a plan view showing a configuration of a core piece of the rotor core shown in FIG. 48. FIG. 51 is a plan view showing a configuration of the core piece of the rotor core shown in FIG. 48. FIG. 51A shows a state in which the core piece is at an angle of 0° as a reference in rotation about a center point Q at the center of the rotary shaft 1, and FIG. 51B to FIG. 51E show states of each being rotated by a predetermined rotation angle counterclockwise from the state of FIG. 51A, and are plan views showing states of being rotated by 90° in FIG. 51B, 180° in FIG. 51C, 270° in FIG. 51D, and one revolution = 360° (return to 0°) in FIG. 51E.

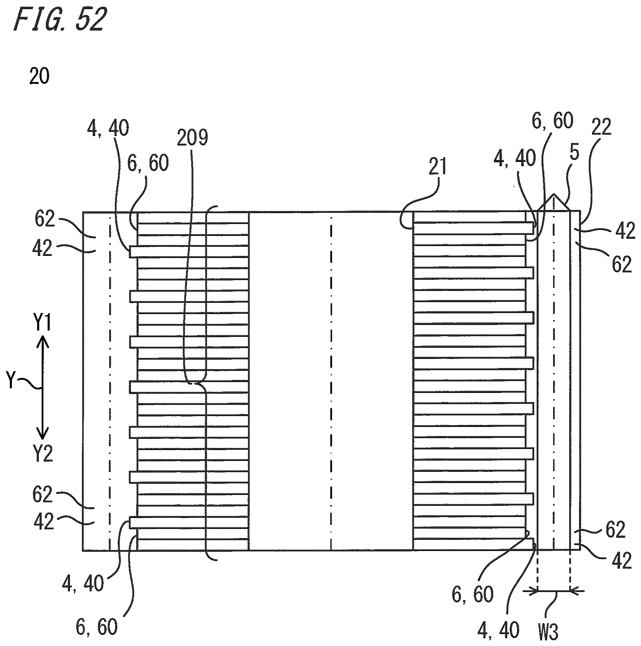

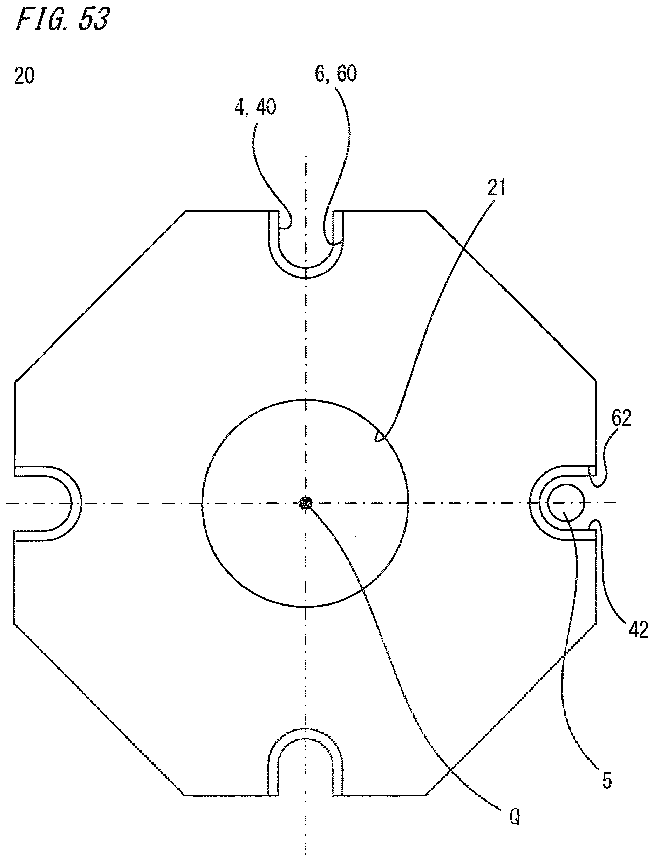

FIG. 52 is a vertical sectional view showing a state in which a positioning pin is inserted into the rotor core shown in FIG. 48. FIG. 53 is a plan view showing a state in which the positioning pin is inserted into the rotor core shown in FIG. 49.

In the above embodiment 9, the case where the positioning portion 4 has the cutout 42 connected to the outer circumferential surface 22 has been shown, whereas, in the present embodiment 12, a case where, in addition to the positioning portion 4 having the cutout 42, the through hole 6 has a cutout 62 connected to the outer circumferential surface 22, will be described. In the drawings, the same parts as in the above embodiments are denoted by the same reference characters, and the description thereof is omitted.

As shown in FIG. 50, in one kind of core piece 209, each piece has both of the through opening 60 to form the through hole 6 and the positioning opening 40 to form the positioning portion 4. Three through openings 60 are arranged in the circumferential direction, and one positioning opening 40 is provided. The three through openings 60 and the one positioning opening 40 are arranged at intervals of a predetermined angle 90° in the circumferential direction. The positioning opening 40 has the cutout 42 connected to the outer circumferential surface 22. The through opening 60 has the cutout 62 connected to the outer circumferential surface 22.

As shown in FIG. 51A to FIG. 51E, the core piece 205 is rotated about the center point Q at intervals of a rotation angle 90°, while being sequentially stacked from the reception surface side Y2 in the axial direction Y as shown in FIG. 48. As a result, the positioning portions 4 are formed in all the through holes 6 of the rotor core 20 as shown in FIG. 49.

Thus, one kind of core piece 209 having both of the through opening 60 and the positioning opening 40 is stacked while being rotated in each layer, whereby it becomes possible to provide the positioning portion 4 at a part in every through hole 6, so that the die configuration for performing press work for the core piece 209 can be simplified and the die cost therefor can be reduced.

As shown in FIG. 52 and FIG. 53, the positioning pin 5 is inserted into the through hole 6 of the rotor core 20 as in the above embodiments, whereby the rotor 2 can be manufactured.

In a case where a high retention force is required between the rotary shaft 1 and the rotor core 20, it is necessary to ensure rigidity in the vicinity of the press-fit hole 21. In this case, the cutout 42 and the cutout 62 connected to the outer circumferential surface 22 are formed at the positioning portion 4 and the through hole 6, whereby reduction in rigidity in the vicinity of the press-fit hole 21 can be avoided. In addition, since the cutout 42 and the cutout 62 connected to the outer circumferential surface 22 are formed at the positioning portion 4 and the through hole 6, rigidity of the positioning pin 5 can be ensured.

In the rotor according to embodiment 12 configured as described above, the same effects as in the above embodiments are provided, and in addition,
the positioning portion has a cutout connected to the outer circumferential surface of the rotor core, and
the through hole has a cutout connected to the outer circumferential surface of the rotor core.

Thus, reduction in rigidity of the press-fit hole can be avoided.

The positions of the positioning portions 4 and the through holes 6 provided in the rotor core 20, described in the above embodiments, are not limited to those shown in the drawings, and may be set as appropriate in accordance with the structure of the rotor, whereby the same effects as in the embodiments can be provided.

### Embodiment 13

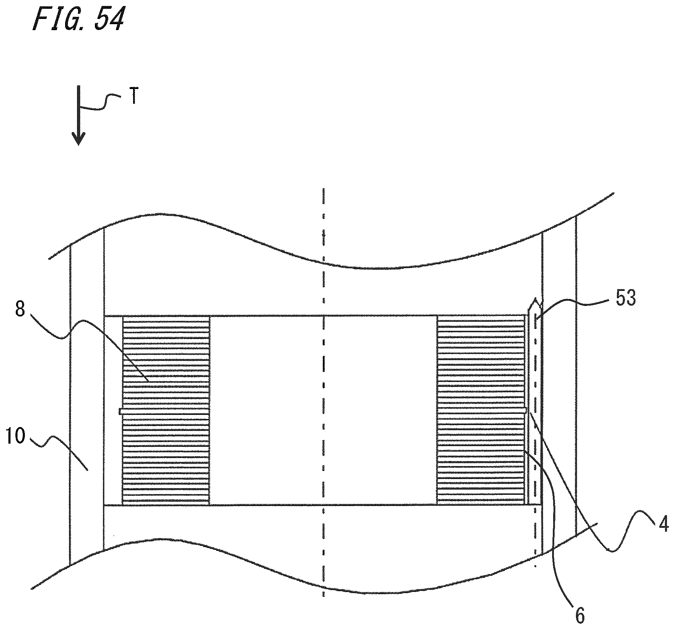

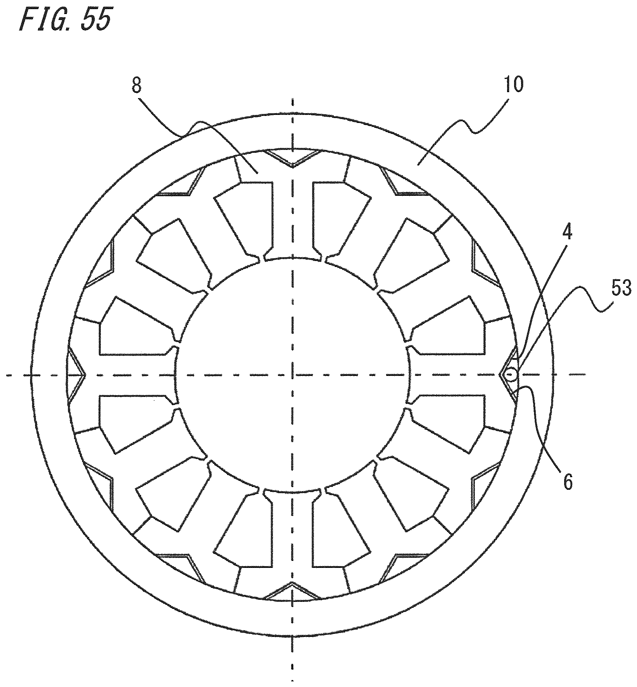

In the above embodiment 1, examples of other components different from a rotor of a rotary electrical machine are mentioned. In the present embodiment 13, a more specific example will be described. FIG. 54 is a vertical sectional view showing a configuration of a rotary electrical machine according to embodiment 13. FIG. 55 is a plan view showing a configuration of a stator of the rotary electrical machine shown in FIG. 54.

In the drawings, the same parts as in the above embodiments are denoted by the same reference characters, and the description thereof is omitted. The through hole 6 and the positioning portion 4 are formed on the outer circumferential side of the stator 8. In an attachment process for the motor case 10, a positioning pin 53 is inserted into the through hole 6 provided with the positioning portion 4.

In a manufacturing method for the stator of the rotary electrical machine according to embodiment 13 configured as described above, the positioning pin 53 is inserted into the through hole 6 having the positioning portion 4 for the stator 8, and the stator 8 is placed at a surface of a jig. Thus, in a state in which positioning of the stator 8 is made, the motor case 10 is attached in an insertion direction T. At this time, the motor case 10 side is also positioned.

In general, the stator 8 is provided with a wire connection portion to be connected to an ECU (abbreviation for electronic control unit) having a control function, and for the connection to the ECU, high positioning accuracy is required in attachment of the motor case 10 and the stator 8. Then, as shown in FIG. 54, as in the above embodiments, the stator 8 is provided with the through hole 6 and the positioning portion 4, and the positioning pin 53 is inserted, to perform placement. Thus, high positioning accuracy can be achieved even in a state in which stacking displacement or the like is present.

Without limitation to such a rotary electrical machine, the present disclosure is applicable to any component that needs to be positioned relative to a manufacturing apparatus. In this case, as in the case shown above, the component that needs to be positioned relative to the manufacturing apparatus has the through hole 6 into which the positioning pin 5 provided to the manufacturing apparatus is insertable, and the through hole 6 has, at a part in the penetration direction (the same direction as the axial direction Y), the positioning portion 4 having the smaller diameter W2 than the diameter W1 of another part of the through hole 6, whereby the present disclosure can be implemented in the same manner.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: rotary shaft
- 10: motor case
- 100: rotary electrical machine
- 2: rotor
- 20: rotor core
- 200: core piece
- 201: core piece
- 202: core piece
- 203: core piece
- 204: core piece
- 205: core piece
- 206: core piece
- 207: core piece
- 208: core piece
- 209: core piece
- 21: press-fit hole
- 22: outer circumferential surface
- 25: rotor core
- 3: magnet
- 4: positioning portion
- 40: positioning opening
- 41: cutout
- 42: cutout
- 5: positioning pin
- 50: positioning pin
- 51: positioning pin
- 52: positioning pin
- 53: positioning pin
- 6: through hole
- 60: through opening
- 61: cutout
- 62: cutout
- 8: stator
- 9: coil
- G: gap
- T: insertion direction
- W1: diameter
- W2: diameter
- W3: maximum diameter
- Y: axial direction
- Y1: press-fit start side
- Y2: reception surface side

## Claims

1. A rotor comprising:
a rotor core provided with a rotary shaft as a rotation center of a rotary electrical machine; and
a magnet provided to the rotor core, wherein
the rotor core includes
a press-fit hole into which the rotary shaft is inserted in an axial direction so as to be fixed, and
a through hole which penetrates in the axial direction and is formed at one or more locations in a circumferential direction, between the press-fit hole and an outer circumferential surface of the rotor core, and
the through hole has, at a part in the axial direction, a positioning portion having a smaller diameter than a diameter of another part of the through hole.

2. The rotor according to claim 1, wherein
a plurality of the rotor cores are arranged in the axial direction of the rotary shaft,
the plurality of rotor cores are fixed to the rotary shaft while being shifted from each other by a predetermined phase angle, and
the through holes of the plurality of rotor cores are formed so as to communicate with each other in the axial direction in a state in which the rotor cores are skewed relative to each other.

3. The rotor according to claim 1 or 2, wherein
the positioning portions are formed at positions on both end surface sides in the axial direction of the rotor core.

4. The rotor according to any one of claims 1 to 3, wherein
the positioning portion is formed at a position of a center part in the axial direction of the rotor core.

5. The rotor according to claim 1 or 2, wherein
the positioning portion is formed at a position on one end surface side in the axial direction of the rotor core.

6. The rotor according to any one of claims 1 to 5, wherein
the positioning portion has a cutout connected to the press-fit hole or the outer circumferential surface of the rotor core.

7. The rotor according to any one of claims 1 to 5, wherein
the positioning portion has a cutout connected to the press-fit hole of the rotor core, and
the through hole has a cutout connected to the press-fit hole of the rotor core.

8. The rotor according to any one of claims 1 to 5,
wherein
the positioning portion has a cutout connected to the outer circumferential surface of the rotor core, and
the through hole has a cutout connected to the outer circumferential surface of the rotor core.

9. The rotor according to any one of claims 1 to 8,
wherein
the rotor core is formed by stacking a plurality of core pieces in the axial direction, and
the plurality of core pieces are formed in a state of being fixed to each other in the axial direction by a fixation portion.

10. The rotor according to claim 9, wherein
the core pieces of the rotor core include a plurality of kinds,
one kind of the core piece has a through opening to form the through hole, and
another kind of the core piece has a positioning opening to form the positioning portion.

11. The rotor according to claim 9, wherein
the rotor core has a plurality of the through holes arranged at predetermined intervals in the circumferential direction,
each core piece has a plurality of through openings to form a plurality of the through holes, and a positioning opening to form the positioning portion, and
the rotor core is formed by stacking the core pieces rotationally about the rotary shaft.

12. The rotor according to any one of claims 1 to 11, wherein
the positioning portion has a circular shape.

13. A rotary electrical machine comprising:
the rotor according to any one of claims 1 to 12; and
a stator having a plurality of windings and provided on an outer circumferential side of the rotor so as to be opposed thereto with a predetermined air gap therebetween.

14. A rotary electrical machine according to claim 13, wherein
the rotary electrical machine is an electric power steering motor of an automobile.

15. A rotor manufacturing method for manufacturing the rotor according to any one of claims 1 to 12, wherein
after a positioning pin having a maximum diameter that allows insertion into the positioning portion and is smaller than a diameter of another part of the through hole is inserted into the through hole having the positioning portion in the rotor core,
the rotary shaft is provided by being press-fitted into the press-fit hole of the rotor core, and then the positioning pin is pulled out from the rotor core.

16. A component to be positioned relative to a manufacturing apparatus, wherein
the component has a through hole into which a positioning pin provided to the manufacturing apparatus is insertable, and
the through hole has, at a part in a penetration direction, a positioning portion having a smaller diameter than a diameter of another part of the through hole.

17. A component manufacturing method for manufacturing the component according to claim 16, wherein
after the positioning pin having a maximum diameter that allows insertion into the positioning portion and is smaller than a diameter of another part of the through hole is inserted into the through hole having the positioning portion in the component,
a manufacturing process by the manufacturing apparatus for the component is performed, and then the positioning pin is pulled out from the component.
